# EUROPEAN PATENT APPLICATION

(11) **EP 3 275 934 A1**
(43) Date of publication of application: **31.01.2018**
(21) Application number: 16772763.5
(22) Date of filing: 28.03.2016
(51) Int. Cl.: C08L 29/14, B32B 17/10, B32B 27/30, C03C 27/12, C08K 5/06

(54) **INTERMEDIATE FILM FOR LAMINATED GLASS**

(30) Priority: 27.03.2015 JP 2015067225
(71) Applicant: Kuraray Co., Ltd., Okayama 710-0801 (JP)
(72) Inventor: ASANUMA, Yoshiaki, Kurashiki-shi Okayama 713-8550 (JP); KUSUDOU, Takeshi, Kurashiki-shi Okayama 713-8550 (JP)
(74) Representative: Müller-Boré & Partner Patentanwälte PartG mbB
(86) International application number: PCT/JP2016/059981
(87) International publication number: WO 2016/158882

(57) **Abstract**

Provided is an intermediate film for laminated glass which is composed of a composition having both a sufficiently reduced glass transition temperature and sufficiently high tanδ. Also provided is an intermediate film for sound-insulating laminated glass having improved sound-insulating properties not only in the coincidence region but also in the mass-dominated region.

This intermediate film for laminated glass is composed of a composition (A) containing 100 parts by mass of at least one resin (a1) selected from the group consisting of thermoplastic resins and thermosetting resins, and 10-1000 parts by mass of at least one compound (a2) selected from the group consisting of specific compound 1 through compound 4.

## Description

### Technical Field

The present invention relates to an intermediate film for laminated glass.

### Background Art

Laminated glass obtained by sandwiching an intermediate film for laminated glass, which has high strength and high transparency as well as excellent flexibility and adhesion properties to glass, between two glasses is used for various safety glasses such as car front glasses.

On the other hand, thermoplastic resins and thermosetting resins, for example, polyvinyl acetals typified, for example, by polyvinyl butyral are excellent in adhesion properties to and compatibility with an organic/inorganic substrate and solubility in an organic solvent. Therefore, it is widely used for various adhesives, binders for ceramic, various inks, paints and the like, and intermediate films for safety glasses.

Since intermediate films for laminated glass require a certain degree of flexibility, a composition in which polyvinyl butyral and a plasticizer are mixed is usually used. Particularly, in an intermediate film for laminated glass having sound-insulating performance, by using a composition containing a larger amount of a plasticizer than usual laminated glass, sound-insulating performance around room temperature is improved (for example, Patent Document 1).

### Prior Art Document

### Patent Document

Patent Document 1: JP 2007-008798 A

### Summary of Invention

### Problem to be solved by the invention

Incidentally, when a thermoplastic resin or a thermosetting resin, for example, polyvinyl butyral is mixed with a plasticizer, as the amount of the plasticizer is increased to reduce the glass transition temperature of a composition, the magnitude of tanδ at around the glass transition temperature is also decreased. In an intermediate film for sound-insulating laminated glass, it is known that the higher the tanδ, the greater the effect of reducing the coincidence effect of the laminated glass. However, with compositions known to date, it was difficult to decrease their glass transition temperatures while keeping the magnitudes of tanδ around the glass transition temperatures.

Therefore, it is an object of the present invention to provide a composition containing a thermoplastic resin or a thermosetting resin, for example, a polyvinyl acetal and a plasticizer, wherein the composition has both a sufficiently reduced glass transition temperature and sufficiently high tanδ compared to the resin contained in the composition. It is another object of the present invention to provide an intermediate film for sound-insulating laminated glass having improved sound-insulating properties not only in the coincidence region but also in the mass-dominated region.

### Means for solving the problem

According to the present invention, the above objects are achieved by providing the following:
[1] An intermediate film for laminated glass which is composed of a composition (A) containing 100 parts by mass of at least one resin (a1) selected from the group consisting of thermoplastic resins and thermosetting resins, and 10 to 1000 parts by mass of at least one compound (a2) selected from the group consisting of compound 1 through compound 4,
   wherein the compound 1 is a compound represented by Chemical Formula (1): 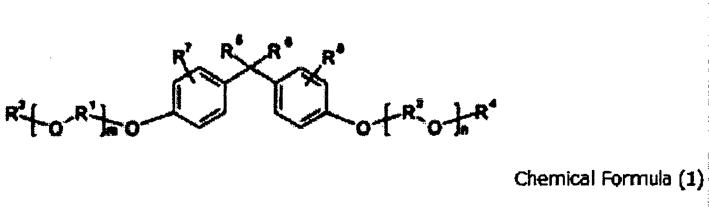 wherein R¹ and R² are each independently a group selected from the group consisting of a dimethylene group optionally having an alkyl substituent, a trimethylene group optionally having an alkyl substituent and a tetramethylene group optionally having an alkyl substituent, R³ and R⁴ are each independently a group selected from the group consisting of a hydrogen atom, an acyl group and an alkyl group, R⁵ and R⁶ are each independently a group selected from the group consisting of a hydrogen atom and an organic group, R⁷ and R⁸ are each independently any substituent which may be present or absent, m and n are any natural numbers, and (m+n) per one molecule has an average of 2 to 10;
   the compound 2 is a compound, other than the compound 1, having at least one carbon atom bonded to four atoms which are all non-hydrogen atoms, at least one of the carbon atoms being directly bonded to at least three cyclic structures;
   the compound 3 is a compound, other than the compound 1 and the compound 2, having one carbon atom bonded to four atoms which are all non-hydrogen atoms in a condensed ring skeleton, wherein at least one of groups bonded to the carbon atom is a group selected from the group consisting of a hydroxyl group, and an organic group having a linear or branched chain; and
   the compound 4 is an acene-based compound, other than the compounds 1 to 3, having a skeleton formed by condensation of three or more benzene rings, and a molecular weight of 150-10000.
[2] The intermediate film for laminated glass according to the above [1], wherein the resin (a1) is a thermoplastic resin.
[3] The intermediate film for laminated glass according to the above [2], wherein the thermoplastic resin has an ester value of 5 mgKOH/g to 800 mgKOH/g.
[4] The intermediate film for laminated glass according to the above [2] or [3], wherein the thermoplastic resin is at least one resin selected from the group consisting of polyvinyl acetals, polyvinyl carboxylates and olefin-vinyl carboxylate copolymers.
[5] The intermediate film for laminated glass according to the above [4], wherein the polyvinyl acetal has an average residual hydroxyl group content of 15 mol% to 50 mol%.
[6] The intermediate film for laminated glass according to any of the above [1]-[5], wherein, in the Chemical Formula (1), the ratio of compounds where m+n=2 to 3 is 10 to 100 mass%.
[7] The intermediate film for laminated glass according to any of the above [1]-[6], wherein, in the Chemical Formula (1), R⁵ and R⁶ are both methyl groups.
[8] The intermediate film for laminated glass according to any of the above [1] - [6], wherein, in the Chemical Formula (1), R⁵ and R⁶ are directly bonded to form a cyclic structure.
[9] The intermediate film for laminated glass according to any of the above [1] - [8], wherein, in the compound 2, the carbon atom bonded to the four atoms which are all non-hydrogen atoms is directly bonded to four cyclic structures.
[10] The intermediate film for laminated glass according to any of the above [1] - [9], wherein, in the compound 3, two of groups bonded to the carbon atom bonded to the four atoms which are all non-hydrogen atoms are groups selected from the group consisting of a hydroxyl group and an organic group having an linear or branched chain.
[11] The intermediate film for laminated glass according to any of the above [1] - [10], wherein the compound (a2) has a hydroxyl value of 500 mgKOH/g or less.
[12] The intermediate film for laminated glass according to any of the above [1] - [11], containing 1 to 100 parts by mass of a plasticizer (a3) based on 100 parts by mass of the resin (a1), wherein the plasticizer (a3) is not any of the compounds 1-4.
[13] The intermediate film for laminated glass according to the above [12], wherein the plasticizer (a3) contains one or more compounds selected from the group consisting of compounds obtained by esterification reaction of one molecule of a j-valent carboxylic acid with j molecules of a monovalent alcohol (j=1-4), and compounds obtained by esterification reaction of k molecules of a monovalent carboxylic acid with one molecule of a k-valent alcohol (k=1-4).
[14] The intermediate film for laminated glass according to the above [12] or [13], wherein the compound (a2) and the plasticizer (a3) are compatible at 23°C in a ratio contained in the composition (A).
[15] The intermediate film for laminated glass according to any of the above [1]-[14], wherein the composition (A) has a glass transition temperature of -30 to 50°C.
[16] The intermediate film for laminated glass according to any of the above [1] - [15], wherein the composition (A) has tanδ of 1.5 or more at its glass transition temperature, and the tanδ is measured at a frequency of 0.3 Hz in a tension mode.
[17] A multilayer intermediate film for laminated glass comprising at least one layer of the intermediate film for laminated glass according to any of the above [1] - [16].
[18] A laminated glass formed by sandwiching the intermediate film for laminated glass according to any of the above [1] - [16] or the multilayer intermediate film for laminated glass according to the above [17] between two glass plates.

### Effect of the Invention

According to the present invention, it is possible to provide an intermedia film for laminated glass which is composed of a composition having both a sufficiently reduced glass transition temperature and sufficiently high tanδ, the intermediate film having improved sound-insulating properties not only in the coincidence region but also in the mass-dominated region.

### Brief Description of Drawings

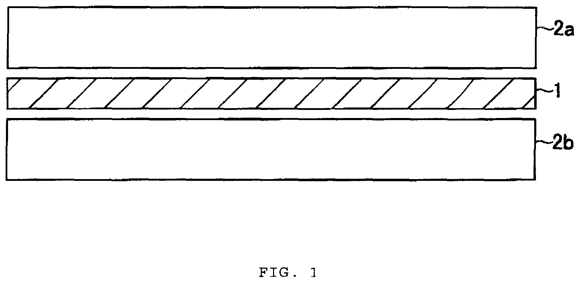

Fig. 1 is an example of a cross-sectional view of an intermediate film for laminated glass.

### Description of Embodiments

An intermediate film for laminated glass of the present invention is composed of a composition (A) containing at least one resin (a1) selected from the group consisting of thermoplastic resins and thermosetting resins, and at least one compound (a2) selected from the group consisting of compound 1 through compound 4.

The resin (a1) preferably has a hydroxyl value of 300 mgKOH/g or less, more preferably 200 mgKOH/g or less, more preferably 100 mgKOH/g or less, more preferably 80 mgKOH/g or less, more preferably 60 mgKOH/g or less, even more preferably 40 mgKOH/g or less, and especially preferably 20 mgKOH/g or less from the viewpoint that excellent sound-insulating performance is exhibited, particularly from the viewpoint that compatibility with a compound (a2) described below is improved. The lower limit of the hydroxyl value in this case is usually 0 mgKOH/g.

On the other hand, from the viewpoint that sufficient mechanical strength is imparted to a sound insulation layer, the resin (a1) preferably has a hydroxyl value of 20 mgKOH/g or more, more preferably 50 mgKOH/g or more, more preferably 100 mgKOH/g or more, more preferably 120 mgKOH/g or more, and even more preferably 140 mgKOH/g or more. Furthermore, the resin (a1) preferably has a hydroxyl value of 1000 mgKOH/g or less, more preferably 800 mgKOH/g or less, even more preferably 500 mgKOH or less, and especially preferably 300 mgKOH/g or less.

The resin (a1) preferably has an ester value of 5 mgKOH/g or more, more preferably 20 mgKOH/g or more, more preferably 50 mgKOH/g or more, more preferably 100 mgKOH/g or more, even more preferably 200 mgKOH/g or more, and especially preferably 300 mgKOH/g or more. Furthermore, the resin (a1) preferably has an ester value of 800 mgKOH/g or less, more preferably 700 mgKOH/g or less, and even more preferably 600 mgKOH/g. When the ester value satisfies the above ranges, excellent sound-insulating performance can be exhibited at an appropriate temperature particularly when the intermediate film for laminated glass of the present invention contains a compound (a2) described below, which is preferred.

The content of the resin (a1) in the composition (A) is preferably 20 mass% or more, more preferably 25 mass% or more, even more preferably 30 mass% or more, and especially preferably 35 mass% or more, based on the total weight of the composition (A). The content of the resin (a1) in the composition (A) is preferably 100 mass% or less, more preferably 90 mass% or less, even more preferably 80 mass% or less, and especially preferably 75 mass% or less, based on the total weight of the composition (A). When the content of the thermoplastic resin in the composition (A) is outside the above ranges, the sound-insulating performance of the intermediate film for laminated glass of the present invention tends to be insufficient, and the strength thereof tends to be insufficient.

The resin (a1) is preferably a thermoplastic resin from the viewpoint that the higher sound-insulating performance is exhibited. The thermoplastic resin used in the present invention may contain a crosslinking structure partially or in a small amount within a range not impairing the properties as the thermoplastic resin in order to improve handling properties and moldability.

### ·<Thermoplastic resin>

When the resin (a1) is a thermoplastic resin, for example, conventionally publicly known thermoplastic resins such as a polyvinyl acetal, a polyvinyl alcohol, a polyurethane, a polyvinyl carboxylate, an olefin-vinyl carboxylate copolymer, a polyurethane elastomer, a polyester elastomer, a styrene-diene block copolymer and a chlorinated polyolefin can be used. Among them, the resin (a1) is preferably a polyvinyl acetal from the viewpoints that the intermediate film for laminated glass of the present invention exhibits excellent sound-insulating performance and that it has excellent weatherability when used for a long time. Also, the resin (a1) is preferably a polyvinyl carboxylate and/or an olefin-vinyl carboxylate copolymer from the viewpoint that the intermediate film for laminated film of the present invention is more superior in sound-insulating performance.

The polyvinyl acetal that can be used in the present invention is usually produced using a polyvinyl alcohol as a raw material. The polyvinyl alcohol can be obtained by a conventionally publicly known method, for example, by polymerizing a vinyl carboxylate compound such as vinyl acetate, and saponifying the resultant polymer. Conventionally publicly known methods such as a solution polymerization method, a bulk polymerization method, a suspension polymerization method and an emulsification polymerization method can be applied as a method of polymerizing the vinyl carboxylate compound. An azo-based initiator, a peroxide-based initiator, a redox-based initiator and the like can be arbitrarily selected as a polymerization initiator depending on the polymerization method. An alcoholysis reaction, a hydrolysis reaction and the like using a conventionally publicly known alkali catalyst or acid catalyst can be applied as the saponification reaction.

Furthermore, the polyvinyl alcohol may be those obtained by saponifying a copolymer obtained by copolymerizing a vinyl carboxylate compound with other monomers as long as it is not against the spirit of the present invention. Examples of the other monomers include, for example, α-olefins such as ethylene, propylene, n-butene and isobutyrene; acrylates such as methyl acrylate, ethyl acrylate, n-butyl acrylate, i-butyl acrylate, t-butyl acrylate, 2-ethylhexyl acrylate, dodecyl acrylate and octadecyl acrylate; methacrylates such as methyl methacrylate, ethyl methacrylate, n-butyl methacrylate, i-butyl methacrylate, t-butyl methacrylate, 2-ethylhexyl methacrylate, dodecyl methacrylate and octadecyl methacrylate; acrylamides and derivatives thereof such as acrylamide, N-methylacrylamide, N-ethylacrylamide, N,N-dimethylacrylamide, diacetone acrylamide, acrylamide propane sulfonic acid and a salt thereof, acrylamide propyldimethylamine, a salt thereof and a quaternary salt thereof, and N-methylolacrylamide and a derivative thereof; methacrylamides and derivatives thereof such as methacrylamide, N-methylmethacrylamide, N-ethylmethacrylamide, methacrylamide propane sulfonic acid and a salt thereof, methacrylamide propyldimethylamine, a salt thereof and a quaternary salt thereof, and N-methylolmethacrylamide and a derivative thereof; vinyl ethers such as methyl vinyl ether, ethyl vinyl ether, n-butyl vinyl ether, i-butyl vinyl ether, t-butyl vinyl ether, dodecyl vinyl ether and stearyl vinyl ether; nitriles such as acrylonitrile and methacrylonitrile; vinyl halides such as vinyl chloride and vinyl fluoride; vinylidene halides such as vinylidene chloride and vinylidene fluoride; allyl compounds such as allyl acetate and allyl chloride; maleates, maleic anhydrides, vinyl silyl compounds such as vinyl trimethoxysilane, and isopropenyl acetate, and the like. When these other monomers are copolymerized, they are usually used in an amount of less than 10 mol% based on the vinyl carboxylate compound.

The polyvinyl alcohol preferably has a viscosity-average polymerization degree of 150-3500, more preferably 200-2500, and even more preferably 1500-2500. When the viscosity-average polymerization degree is less than 150, the mechanical strength of the composition of the present invention may be insufficient, and when it is more than 3500, solubility in a solvent and processability during melt-processing may deteriorate. The viscosity-average polymerization degree of the polyvinyl alcohol can be measured, for example, in accordance with JIS K6724: 1994.

The polyvinyl acetal that can be used in the present invention can be obtained, for example, by the following method. First, an aqueous solution of a polyvinyl alcohol having a concentration of 3-30 mass% is held at a temperature range of 80-100°C, and then gradually cooled over 10-60 minutes. When the temperature is lowered to -10 to 30°C, an aldehyde and an acid catalyst are added to carry out an acetalization reaction for 30-300 minutes while keeping the temperature. Thereafter, the temperature of a reaction solution is elevated to 20-80°C over 30-200 minutes, and held for 30-300 minutes. Next, the reaction solution is neutralized as necessary by adding a neutralizing agent such as an alkali, and the resin is washed with water and dried so that the polyvinyl acetal can be obtained.

For example, both of organic acids and inorganic acids can be used as the acid catalyst used for the acetalization reaction. Examples thereof include acetic acid, paratoluenesulfonic acid, nitric acid, sulfuric acid, hydrochloric acid and the like. Among them, hydrochloric acid, sulfuric acid and nitric acid are preferably used from the viewpoints that a sufficient reaction rate is obtained and that washing after the reaction is easy.

It is preferred to use a C₁-C₈ aldehyde as the aldehyde used for the acetalization reaction. Examples of the C₁-C₈ aldehyde include, for example, formaldehyde, acetaldehyde, propionaldehyde, n-butyraldehyde, isobutyraldehyde, n-pentylaldehyde, n-hexylaldehyde, 2-ethylbutyraldehyde, n-heptylaldehyde, n-octylaldehyde, 2-ethylhexyl aldehyde, benzaldehyde, and the like. They may be used alone, or may be used in combination of two or more. Among these, it is preferred to use a C₂-C₅ aldehyde, and it is more preferred to use a C₄ aldehyde. Particularly, n-butyraldehyde is preferably used because of the following: it is easily available; the residual aldehyde after the acetalization reaction is easily removed by washing with water and drying; the resultant polyvinyl acetal has excellent mechanical characteristics; and a composition (A) having a high tanδ is obtained while reducing the glass transition temperature of the composition (A).

The polyvinyl acetal that can be used in the present invention has an average residual hydroxyl group content of preferably 15-50 mol%, more preferably 17-42 mol%, even more preferably 23-35 mol%, and especially preferably 26-33 mol%. When the average residual hydroxyl group content is less than 15 mol%, the mechanical strength of the composition (A) tends to be insufficient, and a compatibility with a compound (a2) and a plasticizer (a3) described below tends to deteriorate. When the average residual hydroxyl group content is more than 50 mol%, the composition (A) tends to easily absorb water, and the compatibility with the compound (a2) and the plasticizer (a3) described blow tends to deteriorate.

The polyvinyl acetal that can be used in the present invention has an average residual vinyl ester group content of preferably 0.1-15 mol%, more preferably 0.1-10 mol%, and even more preferably 0.1-5 mol%. When the average residual vinyl ester group content is less than 0.1 mol%, industrially inexpensive production is difficult. When the average residual vinyl ester group content is more than 15 mol%, long time use may cause discoloration and impairment of appearance.

The polyvinyl acetal that can be used in the present invention preferably has an average acetalization degree of 40-84 mol%, more preferably 45-80 mol%, more preferably 50-75 mol%, even more preferably 50-73 mol%, and especially preferably 70-73 mol%. When the average polyvinyl acetalization degree is less than 40 mol%, the compatibility with the compound (a2) and the plasticizer (a3) described below tends to deteriorate. When the average acetalization degree is more than 84 mol%, industrially inexpensive production is difficult, and the mechanical strength of the resultant composition tends to deteriorate.

As the polyvinyl carboxylate that can be used in the present invention, those obtained by polymerizing a vinyl carboxylate compound by a conventionally publicly known method such as a solution polymerization method, a bulk polymerization method, a suspension polymerization method or an emulsification polymerization method can be used. As a polymerization initiator, an azo-based initiator, a peroxide-based initiator, or a redox-based initiator is arbitrarily selected depending on the polymerization method. As the vinyl carboxylate compound, a C₄-C₂₀ vinyl carboxylate compound is preferred, a C₄-C₁₀ vinyl carboxylate compound is more preferred, and a C₄-C₆ vinyl carboxylate compound is even more preferred. When the carbon number of the vinyl carboxylate compound is less than 4, it becomes difficult to produce the intended polymer. When the carbon number is more than 20, the mechanical strength of the intermediate film for laminated glass of the present invention tends to deteriorate, and sound-insulating performance tends to deteriorate. Examples of such vinyl carboxylate compounds include vinyl acetate, n-propenyl acetate, isopropenyl acetate, n-butenyl acetate, isobutenyl acetate, vinyl propionate, vinyl butanoate, vinyl pentanoate, vinyl hexanoate, vinyl octanoate, vinyl decanoate, vinyl dodecanoate, vinyl hexadecanoate, and the like. Among them, in particular, vinyl acetate, vinyl propionate, and vinyl butanoate are preferably used, and vinyl acetate is more preferably used.

As the polyvinyl carboxylate that can be used in the present invention, those obtained by copolymerizing the vinyl carboxylate compound with monomers other than olefins can be used as long as they are not against the spirit of the present invention. Examples of the monomers include, for example, acrylates such as methyl acrylate, ethyl acrylate, n-butyl acrylate, i-butyl acrylate, t-butyl acrylate, 2-ethylhexyl acrylate, dodecyl acrylate and octadecyl acrylate; methacrylates such as methyl methacrylate, ethyl methacrylate, n-butyl methacrylate, i-butyl methacrylate, t-butyl methacrylate, 2-ethylhexyl methacrylate, dodecyl methacrylate and octadecyl methacrylate; acrylamides and derivatives thereof such as acrylamide, N-methylacrylamide, N-ethylacrylamide, N,N-dimethylacrylamide, diacetone acrylamide, acrylamide propane sulfonic acid and a salt thereof, acrylamide propyldimethylamine, a salt thereof and a quaternary salt thereof, and N-methylolacrylamide and a derivative thereof; methacrylamides and derivatives thereof such as methacrylamide, N-methylmethacrylamide, N-ethylmethacrylamide, methacrylamide propane sulfonic acid and a salt thereof, methacrylamide propyldimethylamine, a salt thereof and a quaternary salt thereof, and N-methylolmethacrylamide and a derivative thereof; vinyl ethers such as methyl vinyl ether, ethyl vinyl ether, n-butyl vinyl ether, i-butyl vinyl ether, t-butyl vinyl ether, dodecyl vinyl ether and stearyl vinyl ether; nitriles such as acrylonitrile and methacrylonitrile; vinyl halides such as vinyl chloride and vinyl fluoride; vinilidene halides such as vinylidene chloride and vinylidene fluoride; allyl compounds such as allyl acetate and allyl chloride; maleates or maleic anhydrides, vinyl silyl compounds such as vinyl trimethoxysilane, and the like. When these other monomers are copolymerized, they are usually used in an amount of less than 10 mol% based on the vinyl carboxylate compound.

The polyvinyl carboxylate that can be used in the present invention preferably has a polymerization degree of 500 or more, more preferably 1000 or more, and even more preferably 1500 or more. The polymerization degree of the polyvinyl carboxylate is preferably 10000 or less, more preferably 5000 or less, and even more preferably 3500 or less. When the polymerization degree satisfies the above ranges, the intermediate film for laminated glass of the present invention exhibits excellent sound-insulating performance and sufficient mechanical strength, which is preferred.

conventionally publicly known olefin-vinyl carboxylate copolymers can be used as the olefin-vinyl carboxylate copolymers that can be used in the present invention. As the olefins, conventionally publicly known compounds such as ethylene, propylene, n-butene, isobutyrene, butadiene and isoprene can be used. Examples of the vinyl carboxylate compounds include vinyl acetate, n-propenyl acetate, isopropenyl acetate, n-butenyl acetate, isobutenyl acetate, vinyl propionate, vinyl butanoate, vinyl pentanoate, vinyl hexanoate, vinyl heptanoate, vinyl octanoate, vinyl nonanoate, vinyl decanoate, vinyl dodecanoate, vinyl hexadecanoate, and the like. Among them, using an ethylene-vinyl acetate copolymer is preferred from the viewpoint that the intermediate film for laminated glass of the present invention exhibits excellent sound-insulating performance and sufficient mechanical strength.

In the olefin-vinyl carboxylate copolymer, the content ratio of vinyl carboxylate moieties to the total amount of olefin moieties and vinyl carboxylate moieties is preferably 10 mol% or more, more preferably 20 mol% or more, even more preferably 30 mol% or more, and especially preferably 40 mol% or more. The content ratio of vinyl carboxylate moieties to the total amount of olefin moieties and vinyl carboxylate moieties is preferably 90 mol% or less, more preferably 85 mol% or less, even more preferably 80 mol% or less, and especially preferably 75 mol% or less. When the content of vinyl carboxylate moieties satisfies the above ranges, the intermediate film for laminated glass of the present invention can exhibit sufficient mechanical strength and excellent sound-insulating performance at a preferred temperature.

### <Thermosetting resin>

Examples of the thermosetting resin that can be used in the present invention include, for example, an epoxy-based resin, a phenol-based resin, a urethane-based resin, a melamine-based resin, an unsaturated polyester-based resin, and the like.

### <Compound (a2)>

The intermediate film for laminated glass of the present invention contains at least one compound (a2) selected from the group consisting of compound 1 through compound 4.

### <Compound 1 (first plasticizer)>

The compound 1 is a compound represented by Chemical Formula (1):

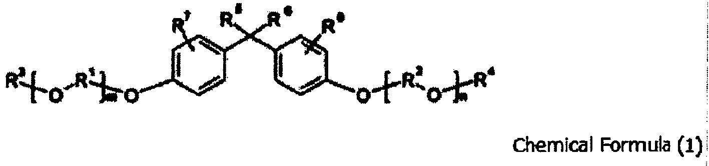

Compounds represented by the Chemical Formula (1) are sometimes also referred to as "first plasticizer". The plasticizers in the present invention indicate substances showing the effect of reducing the viscosity of the composition at any temperature when it is added to a resin.

In the Chemical Formula (1), R¹ and R² are each independently a group selected from the group consisting of a dimethylene group optionally having an alkyl substituent, a trimethylene group optionally having an alkyl substituent and a tetramethylene group optionally having an alkyl substituent. The dimethylene group is a group represented by -Ch₂-CH₂-. The dimethylene group having an alkyl substituent represents a dimethylene group in which any one or more, preferably one hydrogen atom contained in the dimethylene group is substituted with an alkyl group, more preferably a C₁-C₂₀ alkyl group. The trimethylene group is a group represented by -Ch₂-CH₂-CH₂-. The trimethylene group having an alkyl substituent represents a trimethylene group in which any one or more, preferably one hydrogen atom contained in the trimethylene group is substituted with an alkyl group, more preferably a C₁-C₂₀ alkyl group. The tetramethylene group is a group represented by -Ch₂-CH₂-CH₂-CH₂-. The tetramethylene group having an alkyl substituent represents a tetramethylene group in which any one or more, preferably one hydrogen atom contained in the tetramethylene group is substituted with an alkyl group, more preferably a C₁-C₂₀ alkyl group. Among them, a dimethylene group optionally having an alkyl substituent is preferred. In the Chemical Formula (1), it is preferred that 50-100 mol% of the total amount of R¹ and R² is a group selected from the group consisting of a dimethylene group and a dimethylene group having one methyl substituent, namely -Ch₂-CH₂(CH₃)- from the viewpoints of the compatibility of the compound 1 and the resin (a1), the plasticizing effect of the compound 1 on the resin (a1), increasing the value of tanδ while reducing the glass transition temperature of the composition (A), and inexpensively obtaining the compound 1. When the plasticizer (a3) described below (hereinafter sometimes referred to as a "second plasticizer") is used, from the viewpoint that the compound (a2) and the plasticizer (a3) described below are easily compatible at 23°C in a ratio contained in the composition (A), a dimethylene group having one methyl substituent is preferred. Here, the expression "the compound (a2) and the plasticizer (a3) are compatible" indicates a case where when visually checked, the compound (a2) and/or the plasticizer (a3) are not precipitated, the mixture does not cause phase separation, and is not cloudy.

In the Chemical Formula (1), it is preferred that 50-100 mol%, preferably 70-100 mol%, and more preferably 90-100 mol% of the total amount of R¹ and R² are groups selected from the group consisting of a dimethylene group and a dimethylene group having one methyl substituent from the viewpoints of the compatibility of the compound 1 and the resin (a1), the plasticizing effect of the compound 1 on the resin (a1), increasing the value of tanδ while reducing the glass transition temperature of the composition (A), and inexpensively obtaining the compound 1.

R³ and R⁴ are each independently a group selected from the group consisting of a hydrogen atom, an acyl group and an alkyl group. As the acyl group, a C₂-C₂₀ acyl group is preferred, and a C₂-C₈ acyl group is more preferred. Examples of the preferred acyl group include, for example, an acetyl group, an ethylcarbonyl group, a propylcarbonyl group, a butylcarbonyl group, a pentylcarbonyl group, a 3-pentylcarbonyl group, a hexylcarbonyl group, a 3-heptylcarbonyl group, and the like. As the alkyl group, a C₁-C₂₀ alkyl group is preferred, and a C₁-C₈ alkyl group is more preferred. Examples of the preferred alkyl group include, for example, a methyl group, an ethyl group, a propyl group, a butyl group, a pentyl group, a hexyl group, a heptyl group, an octyl group (including a branched group such as 2-ethylhexyl group), and the like. They may be linear or branched. R³ and R⁴ are optionally selected from among them. From the viewpoint that the compatibility of the compound 1 and the resin (a1) is more improved in the composition (A), preferably 5-100 mol% of the total amount of R³ and R⁴ are hydrogen atoms, more preferably 10-100 mass% are hydrogen atoms, more preferably 30-100 mass% are hydrogen atoms, more preferably 50-100 mass% are hydrogen atoms, even more preferably 80-100 mass%, and especially preferably 90-100 mass% are hydrogen atoms.

R⁵ and R⁶ are each independently a group selected from the group consisting of a hydrogen atom and an optional organic group. R⁵ and R⁶ may be directly bonded to form a cyclic structure. From the viewpoint of the plasticizing effect, those which do not form a cyclic structure are preferred. Examples of R⁵ and R⁶ include a hydrogen atom, aliphatic groups such as a methyl group, an ethyl group, a propyl group, a butyl group and a trifluoromethyl group, aromatic groups such as a phenyl group, and the like. Examples of R⁵ and R⁶ which are directly bonded to form the cyclic structure include a fluorene group and the like. For reference, by Chemical Formula (2): 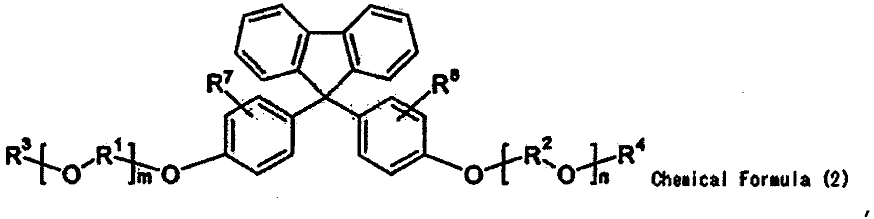 the chemical structure of the compound 1 having a fluorene group as R⁵ and R⁶ is shown.

A case where R⁵ and R⁶ are methyl groups provides excellent compatibility of the compound 1 and the resin (a1), the plasticizing effect of the compound 1 on the resin (a1), and increases the value of tanδ while reducing the glass transition temperature of the composition (A), which is preferred. In addition, a case where R⁵ and R⁶ form a fluorene group increases the maximum value of the tanδ (the value of tanδ around the glass transition temperature) of the composition (A) more than that of the resin (a1), which is preferred.

In the Chemical Formula (1), R⁷ and R⁸ are each independently any substituent which may be present or absent. When R⁷ and R⁸ are present, the bonding positions and their numbers on the aromatic rings are not limited. When the aromatic rings have two or more groups, they may be the same as or different from each other. Specific examples of R⁷ and R⁸ include aliphatic groups such as a methyl group, an ethyl group, a propyl group, a butyl group, an isobutyl group, a tert-butyl group; aromatic groups such as a phenyl group; and halogen atoms such as a fluorine atom, a chlorine atom and a bromine atom.

m and n are any natural numbers. From the viewpoints of the compatibility of the compound 1 and the resin (a1), and the plasticizing effect of the compound 1 on the resin (a1), and increasing the value of tanδ while reducing the glass transition temperature of the composition (A), (m+n) per one molecule has an average of 2 to 10, preferably 2 to 8, more preferably 2 to 6, and even more preferably 2 to 4.

In the compounds represented by the compound (1), the ratio of compounds wherein m+n=2 to 3 is preferably 10-100 mass%, more preferably 30-100 mass%, and even more preferably 50-100 mass%. When the ratio of compounds wherein m+n=2 to 3 satisfies the above ranges, the compatibility of the compound 1 and the resin (a1), and the plasticizing effect of the compound 1 on the resin (a1) become even more excellent, and the value of tanδ can be increased while reducing the glass transition temperature of the composition (A), which is preferred.

From the viewpoints of handling properties of the compound 1, and the plasticizing effect of the compound 1 on the resin (a1), in the compounds (1), the ratio of compounds wherein m+n=2 is preferably 0-80 mass%, more preferably 0-70 mass%, and even more preferably 0-60 mass%, and especially preferably 0-50 mass%.

Examples of the compound 1 include, for example, 2,2-bis[4-(2-acetoxyethoxy)phenyl]propane, 2,2-bis[4-(2-hydroxyethoxy)phenyl]propane, 2,2-bis[4-(2-(2-hydroxyethoxy)ethoxy)phenyl]propane, 2,2-bis[4-(2-methoxyethoxy)phenyl]propane, 1,1-bis[4-(2-hydroxyethoxy)phenyl]ethane, 9,9-bis[4-(2-acetoxyethoxy)phenyl]fluorene, 9,9-bis[4-(2-hydroxyethoxy)phenyl]fluorene, 9,9-bis[4-(2-(2-hydroxyethoxy)ethoxy)phenyl]fluorene and 9,9-bis[4-(2-methoxyethoxy)phenyl]fluorene. Among these, compounds having a fluorine skeleton are preferred from the viewpoint of obtaining higher sound-insulating performance, and from the viewpoint of the weatherability of the resultant intermediate film for laminated glass.

### <Compound 2>

The compound 2 is a compound, other than the compound 1, having at least one carbon atom bonded to four atoms which are all non-hydrogen atoms, at least one of the carbon atoms being directly bonded to at least three cyclic structures.

From the viewpoint of further improving the sound-insulating performance of the intermediate film for laminated glass of the present invention, it is preferred that the above four non-hydrogen atoms are all carbon atoms. Also from the same perspective, the carbon atoms bonded to all the four non-hydrogen atoms are preferably directly bonded to four cyclic structures. Furthermore, from the same perspective, it is preferred that the compound 2 has a condensed cyclic structure, and it is more preferred that the condensed cyclic structure is directly bonded the carbon atoms bonded to the four atoms which are all non-hydrogen atoms. That is, it is particularly preferred that the compound 2 has at least one carbon atom bonded to four carbon atoms, that at least one of the carbon atoms is directly bonded to four cyclic structures, and that at least one of the directly bonded cyclic structures has a condensed cyclic structure.

Examples of the compound 2 include, for example, compounds having a fluorene skeleton such as 9,9-bis(4-hydroxyphenyl)fluorene, 9,9-bis(4-hydroxy-3-methylphenyl)fluorene, 9,9-diphenylfluorene and 9,9-bis(4-bromophenyl)fluorene; and compounds having a tetraphenylmethane skeleton such as diphenylbis(4-hydroxyphenyl)methane, diphenylbis(4-(2-hydroxyethoxy)phenyl)methane and tetraphenylmethane. Among these, compounds having a fluorene skeleton are preferred since they have excellent compatibility with the resin (a1), increase the maximum value of the tanδ of the composition (A) more than that of the resin (a1), and have a high effect of improving the sound-insulating performance of the intermediate film for laminated glass of the present invention. They are also preferred from the viewpoint of the weatherability of the resultant intermediate film for laminated glass.

### <Compound 3>

The compound 3 is a compound, other than the compound 1 and the compound 2, having one carbon atom bonded to four atoms which are all non-hydrogen atoms in a condensed ring skeleton, wherein at least one of groups bonded to the carbon atom is a group selected from the group consisting of a hydroxyl group, and an organic group having a linear or branched chain.

Examples of the compound 3 include, for example, compounds having a fluorene skeleton such as dimethanol fluorene, dimethyl fluorene and diethyl fluorene; and compounds having an adamantane skeleton such as 1,3-dimethyl adamantane, 1,3-dimethanol adamantane, 1-ethyl adamantane and 3,5-dimethyl-1-adamantanol. Among them, compounds having a fluorene skeleton are preferred from the viewpoint of increasing the maximum value of the tanδ of the composition (A) more than that of the resin (a1) and from the viewpoint of the weatherability of the resultant intermediate film for laminated glass.

### <Compound 4>

The compound 4 is an acene-based compound, other than the compounds 1 to 3, having a skeleton formed by condensation of three or more benzene rings, and having a molecular weight of 150-10000.

Examples of the compound 4 include, for example, acene-based compounds (anthracene compounds) such as 9-(hydroxymethyl)anthracene, 9-(2-hydroxyethyl)anthracene, 2-chloroanthracene, 2-bromoanthracene, 1,8-bishydroxymethylanthracene and 9-bromoanthracene.

The compound (a2) preferably has a molecular weight of 150 or more, more preferably 250 or more, more preferably 300 or more, even more preferably 350 or more, and especially preferably 400 or more. The compound (a2) preferably has a molecular weight of 10000 or less, more preferably 2000 or less, more preferably 1200 or less, even more preferably 1000 or less, and especially preferably 800 or less. When the molecular weight of the compound (a2) is less than 150, the compound (a2) tends to be volatilized when used for a long time. When it is more than 10000, the compatibility with the thermoplastic resin and the thermosetting resin may deteriorate or sufficient sound-insulating performance may not be exhibited.

The compound (a2) used in the present invention preferably has a hydroxyl value of 150-400 mgKOH/g, more preferably 200-350 mgKOH/g, and even more preferably 230-320 mgKOH/g. The hydroxyl value of the compound (a2) in the above ranges can provide the excellent compatibility of the compound (a2) and the resin (a1), and the good plasticizing effect of the compound (a2) on the resin (a1), and can increase the value of tanδ of the resultant composition (A), which is preferred. In addition, from the viewpoint of maintaining the sound-insulating performance of the intermediate film for laminated glass of the present invention even when used for a long time, the compound (a2) preferably has a hydroxyl value of 500 mgKOH/g or less, more preferably 300 mgKOH/g or less, more preferably 200 mgKOH/g or less, more preferably 100 mgKOH/g or less, even more preferably 50 mgKOH/g or less, and especially preferably 20 mgKOH/g or less. The lower limit of the hydroxyl value in this case is usually 0 mgKOH/g.

From the viewpoint of the compatibility with the resin (a1), and maintaining the sound-insulating performance of the intermediate film for laminated glass of the present invention even when used for a long time, the compound (a2) preferably has an ester value of 300 mgKOH/g or less, more preferably 200 mgKOH/g or less, more preferably 100 mgKOH/g or less, even more preferably 50 mgKOH/g or less, and especially preferably 20 mgKOH/g or less. The lower limit of the ester value in this case is usually 0 mgKOH/g.

The amount of the compound (a2) contained in the composition (A) is 10-1000 parts by mass based on 100 parts by mass of the resin (a1) contained in the composition (A). The amount of the compound (a2) is preferably 15 parts by mass or more, more preferably 20 parts by mass or more, more preferably 35 parts by mass or more, even more preferably 55 parts by mass or more, and especially preferably 75 parts by mass or more. Furthermore, the amount of the compound (a2) is preferably 300 parts by mass or less, more preferably 200 parts by mass or less, more preferably 170 parts by mass or less, even more preferably 150 parts by mass or less, and especially preferably 130 parts by mass or less. When the amount of the compound (a2) is less than 10 parts by mass, the effect of adding the compound (a2) may not be exhibited. When it is more than 1000 parts by mass, the compound (a2) may bleed from the composition (A) or phase separation between the resin (a1) and the compound (a2) may occur. From the viewpoint of further inhibiting bleeding of the compound (a2), the amount of the compound (a2) may be 100 parts by mass or less or 90 parts by mass or less as necessary.

### <Plasticizer (a3) (second plasticizer)>

The composition (A) may contain a plasticizer (a3). The plasticizer (a3) is not any of the compounds 1-4. In particular, from the viewpoint that high impact resistance is imparted to the intermediate film for laminated glass of the present invention, containing the plasticizer (a3) is preferred.

As the plasticizer (a3) that can be used in the present invention, conventionally publicly known plasticizers for polyvinyl acetals can be used, in a case where they have excellent compatibility with the resin (a1) and an excellent plasticizing effect on the resin (a1), and the resin (a1) is a polyvinyl acetal. When the plasticizer (a3) is used, it is preferred that the compound (a2) and the plasticizer (a3) are compatible at 23°C in a ratio contained in the composition (A) from the viewpoints that workability when producing the composition (A) is excellent and that the resultant composition (A) has transparency. Here, the expression "are compatible" indicates a case where, when visually checked, the compound (a2) and/or the plasticizer (a3) are not precipitated, the mixture does not cause phase separation, and is not cloudy.

As the plasticizer (a3), compounds which has the excellent compatibility with the resin (a1) and the excellent plasticizing effect on the resin (a1), for example, one or more compounds selected from the group consisting of compounds obtained by esterification reaction of one molecule of a j-valent carboxylic acid with j molecules of a monovalent alcohol (j=1-4), and compounds obtained by esterification reaction of k molecules of a monovalent carboxylic acid with one molecule of a k-valent alcohol (k=1-4) are preferably used. From the viewpoints of the compatibility of the plasticizer (a3) and the resin (a1), and the plasticizing effect of the plasticizer (a3) on the resin (a1), j is preferably 1-3, more preferably 1-2, and especially preferably 2. From the viewpoints of the compatibility of the plasticizer (a3) and the resin (a1), and the plasticizing effect of the plasticizer (a3) on the resin (a1), k is preferably 1-3, more preferably 1-2, and especially preferably 2.

Specific examples of the compounds obtained by esterification reaction of one molecule of a j-valent carboxylic acid with j molecules of a monovalent alcohol (j=1-4) include dihexyl adipate, di-2-ethylhexyl adipate, di(butoxyethyl)adipate, di(butoxyethoxyethyl)adipate, dinonyl adipate, butyl sebacate, hexyl sebacate, di(butoxyethyl) sebacate, cyclohexanedicarboxylic acid diisononylester, dioctyl phthalate, di(2-ethylhexyl)phthalate, tri(2-ethylhexyl)trimellitate, and the like. Specific examples of the compounds obtained by esterification reaction of k molecules of a monovalent carboxylic acid with one molecule of a k-valent alcohol (k=1-4) include triethylene glycol di-2-ethylbutanoate, triethylene glycol di-2-ethylhexanoate, triethylene glycol dinonate, tetraethylene glycol di-2-ethylbutyrate, tetraethylene glycol di-2-ethylhexanoate, glycerin tributyrate, glycerin trihexylate, glycerin tri(ethyl butoxylate), glycerin tri-2-ethylhexylate, and the like. When the resin (a1) is a polyvinyl acetal, triethylene glycol di-2-ethyl hexanoate is particularly preferred among them from the viewpoints of having the excellent compatibility with the polyvinyl acetal, and imparting favorable impact resistance to the resultant composition (A) .

The amount of the plasticizer (a3) used is preferably 1-100 parts by mass, more preferably 3-90 parts by mass, more preferably 5-80 parts by mass, even more preferably 10-75 parts by mass, and especially preferably 15-70 parts by mass, based on 100 parts by mass of the resin (a1). When the amount of the plasticizer (a3) is less than 1 part by mass or less, the effect of containing the plasticizer (a3) is not exhibited. When the amount of the plasticizer (a3) is more than 100 parts by mass, the compound (a2) and/or the plasticizer (a3) may bleed from the composition (A), or the strength of the composition may remarkably deteriorate, which is not preferred.

When the plasticizer (a3) is added to the composition (A), the compound (a2) also shows the effect of improving the compatibility of the resin (a1) and the plasticizer (a3). Particularly, it improves the compatibility when the composition (A) is stored or used at a low temperature of, for example, 5°C. In order to effectively exhibit such an effect, the content ratio of the plasticizer (a3) is preferably 0.03-40 mass times, more preferably 0.05-20 mass times, more preferably 0.08-15 mass times, even more preferably 0.1-10 mass times, and especially preferably 0.15-6 mass times the content of the compound (2a).

The composition (A) may contain an adhesion improving agent (adhesion adjusting agent), an antioxidant, an ultraviolet absorber and other additives as long as the effect of the present invention is not impaired.

Examples of the adhesion improving agent include, for example, alkali metal salts and alkaline earth metal salts such as sodium acetate, potassium acetate, magnesium acetate and magnesium butyrate. The amount added can be adjusted so that, for example, the Pummel value obtained in Pummel test becomes a value appropriate for the purpose.

The composition (A) may contain sodium, and its content is 1-200 ppm, more preferably 3-100 ppm, even more preferably 5-70 ppm, and especially preferably 10-50 ppm. When the sodium content is less than 1 ppm, it is difficult to industrially inexpensively produce the composition (A), and when the intermediate film for laminated glass of the present invention is used for a long time, de-acetalization reaction of the polyvinyl acetal is liable to proceed, which are not preferred. When the sodium content is more than 200 ppm, the intermediate film for laminated glass of the present invention is especially liable to become cloudy when absorbing water, which is not preferred.

The composition (A) is obtained by mixing the resin (a1), the compound (a2), and as necessary, the plasticizer (a3), the antioxidant, the ultraviolet absorber, the adhesion improving agent and other components by use of a conventionally publicly known method. Examples of the mixing method include, for example, melt kneading using a mixing roll, a blast mill, an extruder or the like, or a method in which respective components are dissolved in an appropriate organic solvent and then the solvent is distilled off, etc.

The composition (A) preferably has a glass transition temperature of, for example, -30 to 50°C, more preferably -20 to 40°C, more preferably -10 to 35°C, and especially preferably 0 to 30°C. When the glass transition temperature is within the above ranges, the composition has excellent mechanical strength and moldability, which is preferred. From the viewpoint of exhibiting sound-insulating properties, the glass transition temperature is preferably -30 to 25°C, more preferably -20 to 20°C, and especially preferably -10 to 15°C.

It is preferred that the composition (A) has tanδ of 1.5 or more at its glass transition temperature (temperature T_{A} (°C)) from the viewpoint of improving the sound-insulating performance. The tanδ is measured at a frequency of 0.3 Hz in a tension mode. The tanδ at T_{A}(°C) is more preferably 1.7 or more, more preferably 2.0 or more, more preferably 2.5 or more, more preferably 3.0 or more, more preferably 3.3 or more, even more preferably 3.6 or more, and especially preferably 4.0 or more. The tanδ at T_{A} (°C) is usually 10 or less.

The T_{A} and tanδ can be measured, for example, by using the following method. The composition (A) is formed by a hot press to obtain a 0.8 mm-thick sheet. The sheet was cut to a width of 3 mm, and analyzed using a dynamic viscoelasticity apparatus (manufactured by UBM Co., Ltd., Rheologel E-4000) at a distance between chucks of 20 mm, a frequency of 0.3 Hz, a displacement of 75.9 µm and an automatic static load of 26 g, and in a tension mode while elevating the temperature from -50°C to 120°C at 3°C/min. The temperature T_{A} (°C) was checked, and the value of the tangent loss (tanδ) at T_{A} (°C) was obtained. The tanδ shows the maximum around the temperature T_{A} (°C).

By forming (for example, extrusion forming, press forming and the like) the composition (A), an intermediate film for laminated glass can be obtained. The intermediate film for laminated glass of the present invention has favorable sound-insulating properties.

### <Protective layer>

The present invention also relates to a multilayer intermediate film for laminated glass which comprises at least one layer of the above intermediate film for laminated glass and at least one protective layer composed of a composition (B) containing a resin (b1). Examples of the resin (b1) contained in the composition (B) include, for example, thermoplastic resins such as a polyvinyl acetal, an ethylene-vinyl acetate copolymer and an ionomer. They have excellent mechanical strength, transparency, and adhesion to glass, which is preferred.

When the protective layer composed of the composition (B) is used, the composition (B) preferably contains 40 mass% or more, more preferably 50 mass% or more, more preferably 60 mass% or more, even more preferably 80 mass% or more, and especially preferably 90 mass% or more of these resins (b1). The composition (B) may also contain 100 mass% of these resins (b1). When the content of these resins (b1) is less than 40 mass%, adhesion between the protective layer and the glass may deteriorate and the mechanical strength of the protective layer may become insufficient.

When a polyvinyl acetal is contained in the composition (B), the polyvinyl acetal has an average residual hydroxyl group content of preferably 10 mol% or more, more preferably 15 mol% or more, even more preferably 20 mol% or more, and especially preferably 25 mol% or more. The average residual hydroxyl group content of the polyvinyl acetal is preferably 50 mol% or less, more preferably 45 mol% or less, and even more preferably 40 mol% or less. When the average residual polyvinyl acetal content is less than 15 mol%, the adhesion to the glass tends to deteriorate. When the average residual hydroxyl group content is more than 50 mol%, water resistance tends to deteriorate.

When the polyvinyl acetal is contained in the composition (B), the average residual vinyl ester group content of the polyvinyl acetal is preferably 30 mol% or less, and more preferably 20 mol% or less. When the average residual vinyl ester group content is more than 30 mol%, blocking is liable to occur during the production of the polyvinyl acetal, which becomes difficult to produce. The lower limit of the average residual vinyl ester group content is usually 0.1 mol%.

When the polyvinyl acetal is contained in the composition (B), the average acetalization degree is preferably 40 mol% or more, and preferably 90 mol% or less. When the average acetalization degree is less than 40 mol% or less, compatibility with a plasticizer and the like tends to deteriorate. When the average acetalization degree is more than 90 mol%, the reaction for obtaining a polyvinyl acetal resin may require a long time, which is sometimes not preferred in terms of the process, and sufficient mechanical strength may not be obtained. The average acetalization degree is more preferably 60 mol% or more, even more preferably 65 mol% or more from the viewpoints of the water resistance and the compatibility with the plasticizer, and especially preferably 70 mol% or more. The average acetalization degree is preferably 85 mol% or less, more preferably 80 mol% or less, and especially preferably 75 mol% or less.

When the polyvinyl acetal is contained in the composition (B), the polymerization degree is preferably 100 or more, more preferably 300 or more, more preferably 1000 or more, even more preferably 1400 or more, and especially preferably 1600 or more. When the polymerization degree of the polyvinyl acetal is too low, penetration resistance, creep resistant physical characteristics, in particular creep resistant physical characteristics under high temperature and high humidity conditions such as 85°C/85%RH may deteriorate. The polymerization degree of the polyvinyl acetal is preferably 5000 or less, more preferably 3000 or less, more preferably 2500 or less, even more preferably 2300 or less, and especially preferably 2000 or less. When the polymerization degree of the polyvinyl acetal is more than 5000, resin film formation may become difficult. Furthermore, in order to improve lamination aptitude of the resultant intermediate film for laminated glass, and obtain laminated glass which is more excellent in appearance, the polymerization degree of the polyvinyl acetal is preferably 1800 or less.

When the polyvinyl acetal is contained in the composition (B), since the average residual vinyl ester group content is preferably set to 30 mol% or less, it is preferred to use as a raw material a saponification product of a polyvinyl alcohol having a saponification degree of 70 mol% or more. When the saponification degree of the polyvinyl alcohol is less than 70 mol%, transparency and heat resistance of the resin may deteriorate, and reactivity with aldehydes may also deteriorate. The saponification degree is more preferably 95 mol% or more. The upper limit of the saponification degree is usually 99.9 mol%.

The saponification degree of the polyvinyl alcohol can be measured, for example, according to JIS K6726: 1944.

As aldehydes and polyvinyl acetal resins used for acetalization of the polyvinyl alcohol, any of those in the above intermediate film for laminated glass can be adopted.

When an ethylene-vinyl acetate copolymer is contained in the composition (B), the ratio of vinyl acetate moieties to the total amount of ethylene moieties and vinyl acetate moieties is preferably less than 50 mol%, more preferably less than 30 mol%, even more preferably less than 20 mol%, and especially preferably less than 15 mol% from the viewpoint that the mechanical strength and flexibility required for the intermediate film for laminated glass are exhibited.

When the ionomer is contained in the composition (B), there is exemplified a resin having structural units derived from ethylene and structural units derived from an α,β-unsaturated carboxylic acid, the α,β-unsaturated carboxylic acid being at least partially neutralized with a metal ion. In an ethylene-α,β-unsaturated carboxylic acid copolymer serving as a base polymer, the content ratio of the structural units of the α,β-unsaturatedcarboxylic acid is preferably 2 mass% or more, more preferably 5 mass% or more. The content ratio of the structural units of the α,β-unsaturatedcarboxylic acid is preferably 30 mass% or less, and more preferably 20 mass% or less. In the present invention, from the viewpoint of easy availability, an ionomer of ethylene-acrylic acid copolymer, and an ionomer of ethylene-methacrylic acid copolymer are preferred. Examples of the α,β-unsaturatedcarboxylic acid that constitute the ionomer include, for example, acrylic acid, methacrylic acid, maleic acid, monomethyl maleate, monoethyl maleate, maleic anhydride, and the like. Acrylic acid or methacrylic acid is particularly preferred. Examples of the metal ion include a sodium ion and the like.

As components other than the resin (b1), a plasticizer (b2), an antioxidant, an ultraviolet absorber, a light stabilizer, a blocking preventing agent, a pigment, a dye, a functional inorganic compound, a heat shielding material (for example, inorganic heat shielding fine particles or organic heat shielding material which have infrared absorbing capability), and the like may be optionally added to the composition (B). In particular, when the polyvinyl acetal is used for the composition (B), the composition (B) preferably contains the plasticizer (b2) from the viewpoints of the mechanical strength and sound-insulating properties of the resultant intermediate film for laminated glass.

As the plasticizer (b2), for example, conventionally publicly known plasticizers for a polyvinyl acetal can be used, and those exemplified in the above plasticizer (a3) are preferably used.

When the composition (B) contains the plasticizer (b2), its content is preferably 20 parts by mass or more, more preferably 25 parts by mass or more, and even more preferably 30 parts by mass or more, based on 100 parts by mass of the resin (b1). The content of the plasticizer in the protective layer is preferably 60 parts by mass or less, more preferably 55 parts by mass or less, and even more preferably 50 parts by mass or less, based on 100 parts by mass of the resin (b1). When the content of the plasticizer is less than 20 parts by mass based on 100 parts by mass of the resin (b1), flexibility of the resultant laminate tends to be insufficient, so that shock absorption as the intermediate film for laminated glass may become a problem. When the content of the plasticizer is more than 60 parts by mass based on 100 parts by mass of the resin (b1), the mechanical strength of the resultant laminate tends to be insufficient. In particular, when the polyvinyl acetal is used, the content of the plasticizer is preferably 35-60 parts by mass from the viewpoint of exhibiting excellent sound-insulating performance.

The lower limit of the thickness of the intermediate film for laminated glass of the present invention is usually 0.005 mm, preferably 0.01 mm, more preferably 0.02 mm, more preferably 0.04 mm, more preferably 0.07 mm, more preferably 0.1 mm, even more preferably 0.15 mm, and especially preferably 0.2 mm. The upper limit thereof is usually 5 mm, preferably 4 mm, more preferably 2 mm, more preferably 1.6 mm, more preferably 1.2 mm, more preferably 1.1 mm, even more preferably 1 mm, and especially preferably 0.79 mm.

The protective layer in the present invention preferably has a thickness of 0.01 mm or more, more preferably 0.1 mm or more, more preferably 0.15 mm or more, even more preferably 0.20 mm, and especially preferably 0.25 mm or more. The protective layer preferably has a thickness of 1.00 mm or less, more preferably 0.70 mm or less, more preferably 0.60 mm or less, more preferably 0.50 mm or less, even more preferably 0.45 mm or less, and especially preferably 0.4 mm or less.

The lower limit of the thickness of the multilayer intermediate film for laminated glass of the present invention is usually 0.1 mm, preferably 0.2 mm, more preferably 0.3 mm, more preferably 0.4 mm, more preferably 0.5 mm, more preferably 0.6 mm, even more preferably 0.7 mm, and especially preferably 0.75 mm. The upper limit thereof is usually 5 mm, preferably 4 mm, more preferably 2 mm, more preferably 1.6 mm, more preferably 1.2 mm, more preferably 1.1 mm, even more preferably 1 mm, and particularly preferably 0.79 mm.

The present invention also relates to a laminated glass formed by sandwiching the intermediate film for laminated glass or the multilayer intermediate film for laminated glass between two glass plates. Such laminated glass can be produced by a conventionally publicly known method. Examples thereof include a method using a vacuum laminator device, a method using a vacuum bag, a method using a vacuum ring, a method using a nip roll, and the like. Furthermore, a method in which after temporary pressure bonding by the above method, main bonding is performed by putting the temporary pressure bonded product in an autoclave is also given.

As the glass laminated with the intermediate film for laminated glass or the multilayer intermediate film for laminated glass of the present invention, inorganic glasses such as float plate glass, polished plate glass, figured glass, wired plate glass, and heat ray absorbing plate glass; and conventionally publicly known organic glasses such as poly(methyl methacrylate) and polycarbonate can be used without any limitation. They may be either colorless or colored. They may be used alone or may be used in combination of two or more. It is preferred that the thickness of the glass is usually 100 mm or less.

The intermediate film for laminated glass or the multilayer intermediate film for laminated glass of the present invention preferably has a surface shape having uneven thereon since it has excellent defoaming properties when it is thermally pressure-bonded to the glass.

### Examples

The present invention will hereinafter be described in more detail by Examples and the like. However, the present invention is not limited by these Examples.

### [Evaluation method]

### (Haze measurement)

Laminated glasses obtained in Examples and Comparative Examples described below were cut to a size of 5 cm X 5 cm. Haze measurement was performed using a haze meter (HZ-1) manufactured by Suga Test Instruments Co., Ltd. The results are shown in Table 6.

### (Measurement of dynamic viscoelasticity)

With regard to intermediate films for laminated glass composed of compositions obtained in Examples and Comparative Examples described below (sound insulation layers, intermediate films for laminated glass composed of a composition containing a resin (a1) and a compound (a2) in Examples), dynamic viscoelasticity measurement was performed by the following method of dynamic viscoelasticity measurement-1 or dynamic viscoelasticity measurement-2.

### (Dynamic viscoelasticity measurement-1)

Sheets obtained in Examples described below were cut to a width of 3 mm. Dynamic viscoelasticity measurement was performed at a frequency of 0.3 Hz in a tension mode (apparatus: DVE-V4 manufactured by Rheology Co., Ltd.), and the tanδ peak temperatures (glass transition temperatures) and the tanδ values (tanδ peak values) at the temperatures were measured. The results are shown in Table 6.

### (Dynamic Viscoelasticity measurement-2: Evaluation of the composition forming a sound insulation layer by dynamic viscoelasticity)

Compositions forming sound insulation layers used in respective Examples and Comparative Examples were pressed using a hot press at 180°C and 100 kg/cm² for 30 minutes to obtain 0.8 mm-thick sheets. The sheets were cut to a width of 3 mm to serve as samples for dynamic viscoelasticity measurement. The samples for measurement were analyzed using a dynamic viscoelasticity apparatus (manufactured by UBM Co., Ltd., Rheologel-E4000) at a distance between chucks of 20 mm, a frequency of 0.3 Hz, a displacement of 75.9 µm and an automatic static load of 26 g and in a tension mode while elevating the temperature from -50°C to 120°C at 3°C/min. From the obtained results, the temperature T_{A} (°C) at which the tangent loss tanδ (=loss elastic modulus /storage elastic modulus) became the maximum was obtained. The temperatures T_{A} and the tanδ (T_{A}) at the temperatures T_{A} are shown in Table 7.

### (Low temperature bleed test)

Sheets obtained in Examples and Comparative Examples described below were adjusted to have a water content of 0.5%, and then stored at 5°C for one week. A sheet surface after storage was lightly wiped with tissue paper, and the presence or absence of the plasticizer which adhered to the tissue paper was evaluated by a visual check. Those with the adhered plasticizer were evaluated as "observed", and those with no adhered plasticizer were evaluated as "none". The results are shown in Table 6.

### (Compatibility of the compound 1 and the plasticizer (a3))

The compound 1 (first plasticizer) and the plasticizer (a3) (second plasticizer) were put in the mass ratios described in Table 5 in a beaker, and stirred at 23°C for 24 hours. The resultant solutions were visually checked to determine if they were "compatible" or "non-compatible". The results are shown in Table 6. Here, "the compound 1 and the plasticizer (a3) are compatible" indicates a case where the compound 1 and/or the plasticizer (a3) are not precipitated, and the mixture does not cause phase separation and is not cloudy when visually checked.

### (Measurement of loss factor of laminated glass)

Intermediate films for laminated glass and multilayer intermediate films for laminated glass used in respective Examples and Comparative Examples were each sandwiched between two 300 mm X 300 mm X 2 mm float glasses, temporarily bonded by vacuum bag, and treated in an autoclave under conditions of 135°C and 1.2 MPa for 30 minutes to obtain laminated glasses with no bubbles. Each laminated glass thus obtained was cut to a size of 25 mm X 300 mm, and shaken by a vibrator (manufactured by EMIC corporation., Compact Vibration Generator 512-A). The frequency response function at the time was detected by a FFT analyzer (manufactured by ONO SOKKI CO., LTD., DS-2100), and loss factors in the third order anti-resonant mode at respective temperatures of 0°C, 5°C, 10°C, 15°C, 20°C, 25°C, 30°C, 35°C and 40°C were obtained using a servo analysis software (manufactured by ONO SOKKI CO., LTD., DS-0242). From the loss factors and values of the third order anti-resonant frequencies obtained in the above test, sound transmission losses at 2000 Hz, 2500 Hz, 3150 Hz, 4000 Hz, 5000 Hz and 6300 Hz at temperatures of 0°C, 5°C, 10°C, 15°C, 20°C, 25°C, 30°C, 35°C and 40°C were calculated, and their average values were obtained. Table 7 shows the temperatures at which the average values of the sound transmission losses are the largest (in Table 7, simply described as the "temperature"), the average values at the temperatures (in Table 7, simply described as the "average value"), and the sound transmission loss values at 5000 Hz (in Table 7, simply described as "5000 Hz"). It shows that the larger average values, the better sound transmission losses in wide frequencies including the so-called mass-dominated region, and that the excellent sound transmission losses at 5000 Hz mean excellent sound-insulating performance at the coincidence region.

### [Resin]

### (Production Example 1)

In a 5L glass container equipped with a reflux condenser, a thermometer and an anchor-type stirrer, 4000 g of ion-exchange water, and 400 g of polyvinyl alcohol-1 (viscosity-average polymerization degree: 1700, saponification degree: 99 mol%) were charged, and the temperature was raised to 95°C to completely dissolve the polyvinyl alcohol. After the resultant solution was gradually cooled to 10°C under stirring at 120 rpm over 30 minutes, 229 g of n-butyraldehyde and 200 mL of a 20% aqueous solution of hydrochloric acid were added thereto. Thereafter, the temperature of the mixture was raised to 65°C over 60 minutes, the mixture was held at 65°C for 120 minutes, and then cooled to room temperature. The obtained resin was washed with ion-exchange water. An aqueous solution of sodium hydroxide was added thereto to neutralize residual acid. The resin was further washed with excess ion-exchange water and dried to obtain polyvinyl butyral (PVB-1). PVB-1 was analyzed in accordance with JIS K6728: 1977. It had an average butyralization degree (average acetalization degree) of 69 mol%, an average residual vinyl ester group content of 1 mol%, and an average residual hydroxyl group content of 30 mol%. The results are shown in Table 1.

### (Production Example 2)

Polyvinyl butyral (PVB-2) was obtained in the same manner as in Example 1, except that the amount of n-butyraldehyde used was changed to 236 g. PVB-2 was analyzed in accordance with JIS K6728: 1977. It had an average butyralization degree of 71 mol%, an average residual vinyl ester group content of 1 mol%, and an average residual hydroxyl group content of 28 mol%. The results are shown in Table 1.

### (Production Example 3)

Polyvinyl butyral (PVB-3) was obtained in the same manner as in Example 1, except that the amount of n-butyraldehyde used was changed to 265 g. PVB-3 was analyzed in accordance with JIS K6728: 1977. It had an average butyralization degree of 78 mol%, an average residual vinyl ester group content of 1 mol%, and an average residual hydroxyl group content of 21 mol%. The results are shown in Table 1.

### (Production Example 4)

Polyvinyl butyral (PVB-4) was obtained in the same manner as in Example 1, except that the polyvinyl alcohol-1 used in Production Example 1 was changed to 400 g of polyvinyl alcohol-2 (viscosity-average polymerization degree: 1700, saponification degree: 92 mol%), and that the amount of n-butyraldehyde used was changed to 231 g. PVB-4 was analyzed in accordance with JIS K6728: 1977. It had an average butyralization degree of 74 mol%, an average residual vinyl ester group content of 7 mol%, and an average residual hydroxyl group content of 19 mol%. The results are shown in Table 1.

### (Production Example 5)

In a 5L glass container equipped with a reflux condenser, a thermometer and an anchor-type stirrer, 4050 g of ion-exchange water, and 330 g of polyvinyl alcohol-2 (viscosity-average polymerization degree: 1700, saponification degree: 92 mol%) were charged, and the temperature was raised to 95°C to completely dissolve the polyvinyl alcohol. After the resultant solution was gradually cooled to 10°C under stirring at 160 rpm over 30 minutes, 197 g of n-butyraldehyde and 200 mL of a 20% aqueous solution of hydrochloric acid were added thereto, and butyralization reaction was carried out for 50 minutes. Thereafter, the temperature of the mixture was raised to 65°C over 60 minutes, the mixture was held at 65°C for 120 minutes, and then cooled to room temperature. The obtained resin was washed with ion-exchange water. An aqueous solution of sodium hydroxide was added thereto to neutralize residual acid. The resin was further washed with excess ion-exchange water and dried to obtain polyvinyl butyral (PVB-5). PVB-5 was analyzed in accordance with JIS K6728: 1977. It had an average butyralization degree (average acetalization degree) of 74 mol%, a vinyl ester unit content of 8 mol%, and a residual hydroxyl group content of 18 mol%. Furthermore, when measured in accordance with JIS K0070: 1992, PVB-5 had a hydroxyl value of 162 mgKOH/g, and an ester value of 73 mgKOH/g. The results are shown in Table 2.

### (Production Example 6)

In a 5L glass container equipped with a reflux condenser, a thermometer and an anchor-type stirrer, 4050 g of ion-exchange water, and 330 g of polyvinyl alcohol-1 (viscosity-average polymerization degree: 1700, saponification degree: 99 mol%) were charged, and the temperature was raised to 95°C to completely dissolve the polyvinyl alcohol. After the resultant solution was gradually cooled to 10°C under stirring at 160 rpm over 30 minutes, 188.5 g of n-butyraldehyde and 200 mL of a 20% aqueous solution of hydrochloric acid were added thereto, and butyralization reaction was carried out for 50 minutes. Thereafter, the temperature of the mixture was raised to 65°C over 60 minutes, the mixture was held at 65°C for 120 minutes, and then cooled to room temperature. The obtained resin was washed with ion-exchange water. An aqueous solution of sodium hydroxide was added thereto to neutralize residual acid. The resin was further washed with excess ion-exchange water and dried to obtain polyvinyl butyral (PVB-6). PVB-6 was analyzed in accordance with JIS K6728: 1977. It had an average butyralization degree (average acetalization degree) of 69 mol%, a vinyl ester unit content of 1 mol%, and an average residual hydroxyl group content of 30 mol%. Furthermore, when measured in accordance with JIS K0070: 1992, PVB-6 had a hydroxyl value of 264 mgKOH/g, and an ester value of 9 mgKOH/g. The results are shown in Table 2.

### (Production Example 7)

In a 2L glass container equipped with a reflux condenser, a thermometer and an anchor-type stirrer, 100 g of polyvinyl alcohol-3 (viscosity-average polymerization degree: 2400, saponification degree: 88 mol%), 270 g of anhydrous propionic acid, and 300 g of pyridine were added, and the mixture was held at 80°C for 360 minutes while stirring. The reaction solution was poured in water, and the obtained precipitate was fully washed with water, followed by drying. The obtained resin (PVOPr) was dissolved in deuterated chloroform, and analyzed by 1H-NMR. It had a vinyl acetate unit content of 12 mol%, and a vinyl propionate unit content of 88 mol%. When measured in accordance with JIS K0070: 1992, PVOPr had a hydroxyl value of 0 mgKOH/g, and an ester value of 570 mgKOH/g. The results are shown in Table 2.

As thermoplastic resins other than the thermoplastic resins in the above production examples, the following thermoplastic resins were used. The details of physical properties are shown in Table 2.
Ethylene-vinyl acetate copolymer-1: vinyl acetate content of 12 mol%
Ethylene-vinyl acetate copolymer-2: vinyl acetate content of 53 mol%
Ethylene-vinyl acetate copolymer-3: vinyl acetate content of 70 mol%
Polyvinyl acetate: vinyl acetate content of 100 mol%

**[Table 1]**

| | Average acetalization degree (mol%) | Average residual vinyl ester groups (mol%) | Average residual hydroxyl groups (mol%) |
|---|---|---|---|
| PVB-1 | 69 | 1 | 30 |
| PVB-2 | 71 | 1 | 28 |
| PVB-3 | 78 | 1 | 21 |
| PVB-4 | 74 | 7 | 19 |

**[Table 2]**

| | Polymerization degree | Average acetalization degree (mol%) | Vinyl ester unit content (mol%) | Average residual hydroxyl group content (mol%) | Ethylene (mol%) | Hydroxyl value (mgKOH/g) | Ester value (mgKOH/g) |
|---|---|---|---|---|---|---|---|
| PVB-5 | 1700 | 74 | 8 | 18 | 0 | 162 | 73 |
| PVB-6 | 1700 | 69 | 1 | 30 | 0 | 264 | 9 |
| PVOPr | 2400 | 0 | 100 | 0 | 0 | 0 | 570 |
| Ethylene-vinyl acetate copolymer-1 | 1100 | 0 | 12 | 0 | 88 | 0 | 192 |
| Ethylene-vinyl acetate copolymer-2 | 1100 | 0 | 53 | 0 | 47 | 0 | 505 |
| Ethylene-vinyl acetate copolymer-3 | 1100 | 0 | 70 | 0 | 30 | 0 | 571 |
| Polyvinyl acetate | 2400 | 0 | 100 | 0 | 0 | 0 | 651 |

### [Compounds (a2) and compounds used in Comparative Examples]

Compounds 1 (first plasticizer) used in respective Examples, and compounds used in Comparative Examples which do not satisfy the requirements of the compound (a2) are shown in Table 3. In addition, compounds 1-4 used in Examples and Comparative Examples are shown in Table 4.

**[Table 3]**

| | R¹ | R² | R³ | R⁴ | R⁵ | R⁶ | R⁷ | R⁸ | Ratio (%) of compounds contained in compound represented by chemical formula 1 | | | | | Average of (m+n) | Hydroxyl value (mgKOH/g) |
|---|---|---|---|---|---|---|---|---|---|---|---|---|---|---|---|
| | | | | | | | | | m+n=2 | m+n=3 | m+n=4 | m+n=5 | m+n=6 or more | | |
| First plasticizer-1 | -CH₂-CH(-CH₃)- | -CH₂-CH(-CH₃)- | H | H | Methyl group | Methyl group | None | None | 41 | 39 | 15 | 5 | 0 | 2.8 | 287 |
| First plasticizer-2 | -CH₂-CH(-CH₃)- | -CH₂-CH(-CH₃)- | H | H | Methyl group | Methyl group | None | None | 97 | 2 | 1 | 0 | 0 | 2.0 | 325 |
| First plasticizer-3 | -CH₂-CH(-CH₃)- | -CH₂-CH(-CH₃)- | H | H | Methyl group | Methyl group | None | None | 4 | 16 | 56 | 18 | 6 | 4.1 | 240 |
| First plasticizer -4 | -CH₂-CH(-CH₃)- | -CH₂-CH(-CH₃)- | H | H | Methyl group | Methyl group | None | None | 0 | 0 | 2 | 4 | 96 | 7.3 | 172 |
| First plasticizer-5 | -CH₂-CH₂- | -CH₂-CH₂- | H | H | Methyl group | Methyl group | None | None | 80 | 17 | 3 | 0 | 0 | 2.2 | 345 |
| First plasticizer-6 | -CH₂-CH₂- | -CH₂-CH₂- | H | H | Methyl group | Methyl group | None | None | 45 | 32 | 18 | 5 | 0 | 2.8 | 319 |
| First plasticizer-7 | -CH₂-CH(-CH2-CH₃)- | -CH₂-CH(-CH₂-CH₃)- | H | H | Methyl group | Methyl group | None | None | 45 | 35 | 8 | 2 | 1 | 2.4 | 279 |
| First plasticizer-8 | -CH₂-CH₂-and -CH₂-CH(-CH₃)- | -CH₂-CH₂-and -CH₂-CH(-CH₃)- | H | H | Methyl group | Methyl group | None | None | 34 | 45 | 14 | 7 | 0 | 2.9 | 298 |
| First plasticizer-9 | -CH₂-CH₂-CH₂-CH₂- | -CH₂-CH₂-CH₂-CH₂- | H | H | Methyl group | Methyl group | None | None | 33 | 48 | 16 | 3 | 0 | 2.9 | 256 |
| First plasticizer 10 | -CH₂-CH(-CH₃)- | -CH₂-CH(-CH₃)- | H | H | H | H | None | None | 45 | 37 | 15 | 3 | 0 | 2.8 | 309 |
| First plasticizer-11 | -CH₂-CH(-CH₃)- | -CH₂-CH(-CH₃)- | Acetyl group | Acetyl | Methyl group | Methyl group | None | None | 41 | 39 | 15 | 5 | 0 | 2.8 | <5 |
| First plasticizer-12 | -CH₂-CH(-CH₃)- | -CH₂-CH(-CH₃)- | H | H | Methyl group | Methyl group | Methyl group | Methyl group | 40 | 40 | 15 | 5 | 0 | 2.9 | 264 |
| Plasticizer-1 for Comparative Example | -CH₂-CH(-CH₃)- | -CH₂-CH(-CH₃)- | H | H | Methyl group | Methyl group | None | None | 0 | 0 | 0 | 0 | 100 | 12 | 121 |
| Plasticizer-2 for Comparative Example | -CH₂-CH₂- | -CH₂-CH₂- | H | H | Methyl group | Methyl group | None | None | 0 | 0 | 0 | 0 | 100 | 12 | 148 |

**[Table 4]**

| | Number of cyclic structures | Number of condensed rings | Hydroxyl value (mgKOH/g) | Ester value (mgKOH/g) | Atom bonded to 4 atoms | Molecular weight | Number of ether bonds | Number of ester bonds | Number of hydroxyl groups |
|---|---|---|---|---|---|---|---|---|---|
| Fluorene compound-1 | 5 | Present | 0 | 215 | 1 | 522 | 2 | 2 | 0 |
| Fluorene compound-2 | 5 | Present | 256 | 0 | 1 | 438 | 2 | 0 | 2 |
| Fluorene compound-3 | 5 | Present | 0 | 0 | 1 | 318 | 0 | 0 | 0 |
| Fluorene compound-4 | 5 | Present | 320 | 0 | 1 | 350 | 0 | 0 | 2 |
| Fluorene compound-5 | 5 | Present | 0 | 0 | 1 | 477.8 | 0 | 0 | 0 |
| Fluorene compound-6 | 3 | Present | 496 | 0 | 1 | 226 | 0 | 0 | 2 |
| Diphenylbis(4-hydroxyphenyl)methane | 4 | Absent | 318 | 0 | 1 | 352 | 0 | 0 | 2 |
| 9-(Hydroxymethyl) anthracene | 3 | Present | 250 | 0 | 0 | 224 | 0 | 0 | 1 |

| | | | | | | | | | |
|---|---|---|---|---|---|---|---|---|---|
| Fluorene compound-1: 9,9-bis[4-(2-acetoxyethoxy)phenyl]fluorene Fluorene compound-2: 9,9-bis[4-(2-hydroxyethoxy)phenyl]fluorene Fluorene compound-3: 9,9-diphenylfluorene Fluorene compound 4: 9,9-bis(4-hydroxyphenyl)fluorene Fluorene compound 5: 9,9-bis(4-bromophenyl)fluorene Fluorene compound 6: fluorene-9,9-dimethanol | | | | | | | | | |

### (Example 1)

One hundred parts by mass of PVB-1, 40 parts by mass of first plasticizer-1, 0.08 part by mass of BHT (2,6-ditertiarybutyl-4-hydroxytoluene) as an antioxidant, and 0.15 part by mass of Tinuvin® 328 as an ultraviolet absorber were roughly mixed by stirring in a beaker, and melt-kneaded (150°C, 5 minutes) by a laboplastomill to obtain composition-1. The composition-1 was pressed at 130°C, 50 kg/cm² for 30 minutes to prepare 0.8 mm-thick sheet-1. The sheet-1 was sandwiched between two 300 mm X 300 mm X 3 mm float glasses, temporarily bonded by means of nip rolls, and treated in an autoclave at 140°C and 1.2 MPa for 30 minutes to obtain laminated glass-1. The composition of the composition-1 is shown in Table 5. The amounts of the first plasticizer and the second plasticizer in Table 5 mean parts by mass based on 100 parts by mass of PVB. In accordance with the above-described [Evaluation method], haze measurement of the laminated glass-1, dynamic viscoelasticity measurement-1 of the sheet-1, and low temperature bleed test were conducted. The results are shown in Table 6.

### (Examples 2-29, Comparative Examples 1-10, Reference Example)

Compositions-2 to 40, sheets-2 to 40, and laminated glasses-2 to 40 were prepared to conduct evaluation in the same manner as in Example 1, except that the composition of Example 1 was changed to those shown in Table 5. With regard to Examples 4-9, 11, 12, 16, 25, 26 and 28, the compatibility of the first plasticizer and the second plasticizer was evaluated as described in the above [Evaluation method]. The results are shown in Table 6.

**[Table 5]**

| | PVB | Compound represented by chemical formula 1 | | Plasticizer (a3) (second plasticizer) | |
|---|---|---|---|---|---|
| | | Kind | Content | Kind | Content |
| Example 1 | PVB-1 | First plasticizer-1 | 40 | - | - |
| Example 2 | PVB-1 | First plasticizer-1 | 60 | - | - |
| Example 3 | PVB-1 | First plasticizer-1 | 100 | - | - |
| Example 4 | PVB-1 | First plasticizer-1 | 60 | 3GO | 22 |
| Example 5 | PVB-1 | First plasticizer-1 | 60 | 3GO | 30 |
| Example 6 | PVB-1 | first plasticizer-1 | 30 | 3GO | 30 |
| Example 7 | PVB-1 | First plasticizer-1 | 15 | 3GO | 40 |
| Example 8 | PVB-1 | First plasticizer-1 | 30 | 3GO | 22 |
| Example 9 | PVB-1 | First plasticizer-1 | 30 | 3GO | 10 |
| Example 10 | PVB-1 | First plasticizer-2 | 60 | - | - |
| Example 11 | PVB-1 | First plasticizer-3 | 60 | 3GO | 22 |
| Example 12 | PVB-1 | First plasticizer-3 | 60 | 3GO | 30 |
| Example 13 | pVB-1 | First plasticizer-4 | 60 | - | - |
| Example 14 | PVB-1 | First plasticizer-5 | 60 | - | - |
| Example 15 | PVB-1 | First plasticizer-6 | 60 | - | - |
| Example 16 | PVB-1 | First plasticizer-6 | 60 | 3GO | 22 |
| Example 17 | PVB-1 | First plasticizer-7 | 60 | - | - |
| Example 18 | PVB-1 | First plasticizer-8 | 60 | - | - |
| Example 19 | PVB-1 | First plasticizer-9 | 60 | - | - |
| Example 20 | PVB-1 | First plasticizer-10 | 60 | - | - |
| Example 21 | PVB-1 | First plasticizer-11 | 60 | - | - |
| Example 22 | PVB-1 | Firstplasticizer-1 | 30 | - | - |
| | | First plasticizer-11 | 30 | | |
| Example 23 | PVB-1 | First plasticizer-12 | 60 | - | - |
| Example 24 | PVB-2 | First plasticizer-1 | 60 | - | - |
| Example 25 | PVB-2 | First plasticizer-1 | 60 | 3GO | 22 |
| Example 26 | PVB-3 | First plasticizer-1 | 60 | 3GO | 22 |
| Example 27 | PVB-3 | First plasticizer-1 | 100 | - | - |
| Example 28 | PVB-4 | First plasticizer-1 | 60 | 3GO | 22 |
| Example 29 | PVB-4 | First plasticizer-1 | 100 | - | - |
| Comparative Example 1 | PVB-1 | - | - | 3GO | 40 |
| Comparative Example 2 | PVB-1 | - | - | 3GO | 50 |
| Comparative Example 3 | PVB-1 | - | - | 3GO | 60 |
| Comparative Example 4 | PVB-1 | - | - | DBEA | 40 |
| Comparative Example 5 | PVB-1 | - | - | Castor oil | 40 |
| Comparative Example 6 | PVB-1 | - | - | Polyester polyol | 40 |
| Comparative Example 7 | PVB-1 | - | - | 3G6 | 40 |
| Comparative Example 8 | PVB-1 | - | - | Polypropylene glycol | 40 |
| Comparative Example 9 | PVB-1 | Plasticizer-1 for comparative example | 60 | - | - |
| Comparative Example 10 | PVB-1 | Plasticizer-2 for comparative example | 60 | - | - |
| Reference E | PVB-1 | - | - | - | - |

| | | | | | |
|---|---|---|---|---|---|
| * 3GO: Triethylene glycol-di-2-ethyl hexanoate * 3G6: Triethylene glycol-di-2-ethyl butanoate | | | | | |

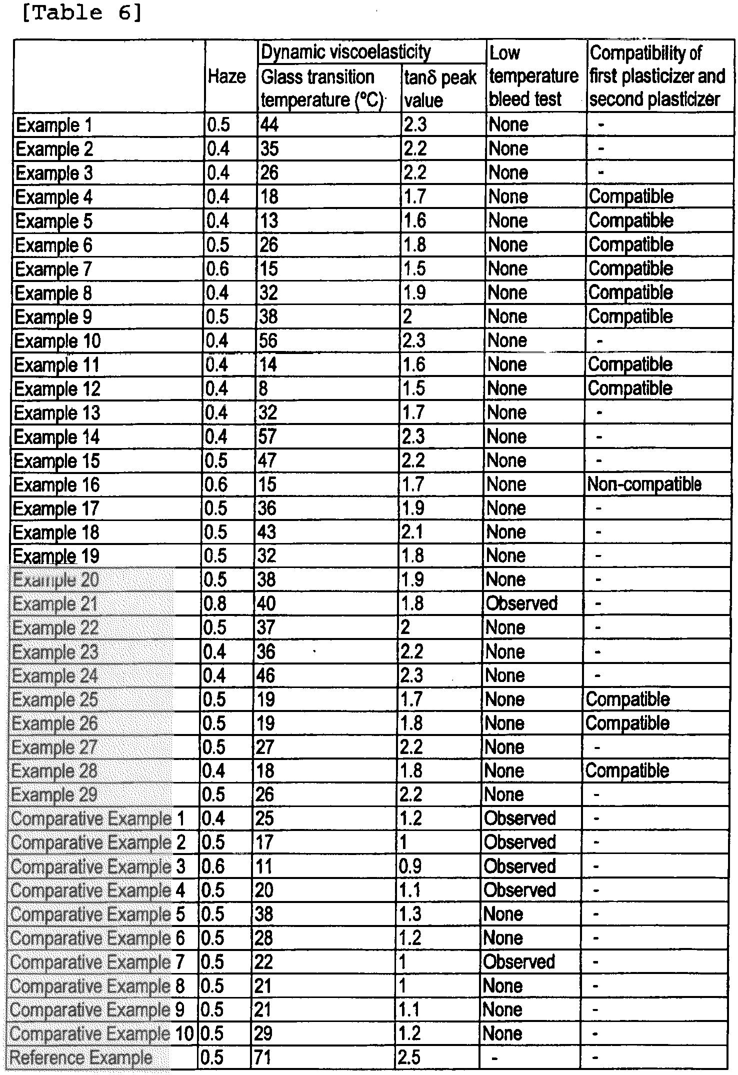

The compositions of Examples 1-29 which meet the requirements of the present invention have high tanδ peak values at their glass transition temperatures even in a state where the glass transition temperatures are sufficiently lowered than the glass transition temperature of the polyvinyl acetal (Reference Example), whereas in Comparative Examples 1-8 which do not meet the requirements of the present invention, tanδ values at glass transition temperatures of the compositions markedly decreased compared with a tanδ value (2.5) at a glass transition temperature of the polyvinyl acetal alone (Reference Example).

### (Example 30)

One hundred parts by mass of an ethylene-vinyl acetate copolymer-1, 100 parts by mass of fluorene compound-1 shown in Table 4 as the compound (a2), and 50 parts by mass of triethylene glycol di-2-ethyl hexanoate as the plasticizer (a3) were prepared, and the mixture was melt-kneaded with a laboplastomill (150°C, 60 rpm, 5 minutes) to obtain composition-41. The composition-41 was heat pressed at 150°C and 100 kgf/cm² for 30 minutes to give 0.8 mm-thick sheet-41. The composition of the composition-41 is shown in Table 7. Furthermore, with regard to the sheet-41, evaluations of T_{A} and tanδ (T_{A}) were conducted as described in dynamic viscoelasticity measurement-2 of the above [evaluation method]. The results are shown in Table 7.

The composition-41 was heat pressed at 150°C and 100 kgf/cm² for 30 minutes to give 0.15 mm-thick sound insulation layer-1. Also, 100 parts by mass of PVB-6 and 36 parts by mass of triethylene glycol di-2-ethyl hexanoate were melt-kneaded with a laboplastomill (150°C, 60 rpm, 5 minutes). The obtained kneaded mixture was pressed at 150°C and 100 kg/cm² for 30 minutes to give 0.3 mm-thick protective layer-1. The obtained sound insulation layer-1 and the protective layer-1 were superposed in the order of the protective layer-1/the sound insulation layer-1/the protective layer-1, and pressed at 30°C and 100 kg/cm² for 10 minutes to obtain multilayer intermediate film-1 for laminated glass. With regard to the multilayer intermediate film-1 for laminated glass, evaluation of sound transmission loss was conducted as described in the above [Evaluation Method]. The results are shown in Table 7.

### (Examples 31-46)

Sheets-42 to 57 were prepared and the evaluations were conducted in the same manner as in Example 30, except that the composition of Example 30 was changed to those shown in Table 7. Multilayer intermediate films 2-17 for laminated glass were produced and the evaluations were conducted in the same manner as in Example 30 except that sound insulation layers-2 to 17 and protective layers were produced with compositions and thicknesses shown in Table 7, and that they were used. The results are shown in Table 7.

### (Example 47)

Sheet-58 was produced and the evaluations were conducted in the same manner as in Example 30 except that the composition of Example 30 was changed to that shown in Table 7. An intermediate film for laminated glass was produced and the evaluations were conducted in the same manner as in Example 30 except that sound insulation layer-18 was produced with a composition and a thickness shown in Table 7, and that only the sound insulation layer-18 served as the intermediate film for laminated glass. The results are shown in Table 7.

**[Table 7]**

| | | Resin | Compound (a2) | | Plasticizer (a3) | | Thickness (mm) | T_{A} (°C) | tanδ (TA) | Sound transmission loss (dB) | | |
|---|---|---|---|---|---|---|---|---|---|---|---|---|
| | | | Kind | Content*² (parts by mass) | Kind | Content*² (parts by mass) | | | | Temperature (°C) | Average value [dB] | 5000 Hz [dB] |
| Example 30 | Sound insulation layer | vinyl acetate copolymer-1 | Fluorene compound -1 | 100 | 3G8*¹ | 50 | 0.15 | -5.7 | 3.7 | 20 | 42.3 | 42.6 |
| | Protective layer | PVB-6 | - | - | 3G8*¹ | 36 | 0.33 | | | | | |
| Example 31 | Sound insulation layer | Ethylene vinyl acetate copolymer-2 | Fluorene compound -1 | 100 | 3G8*¹ | 50 | 0.15 | -10.3 | 3.4 | 15 | 42 | 42 |
| | Protective layer | PVB-6 | - | | 3G8*¹ | 36 | 0.33 | | | | | |
| Example 32 | Sound insulation layer | Ethylene vinyl acetate copolymer-3 | Fluorene compound -1 | 100 | 3G8*¹ | 50 | 0.15 | -21.2 | 2.9 | 5 | 41.3 | 41.5 |
| | Protective layer | PVB-6 | - | | 3G8*¹ | 36 | 0.33 | | | | | |
| Example 33 | Sound insulation layer | Ethylene vinyl acetate copolymer-1 | Fluorene compound -2 | 100 | 3G8*¹ | 60 | 0.15 | -2.5 | 4 | 20 | 42.4 | 42.8 |
| | Protective layer | PVB-6 | - | - | 3G8*¹ | 36 | 0.33 | | | | | |
| Example 34 | Sound insulation layer | PVB-5 | Fluorene compound -2 | 150 | 3G8*¹ | 60 | 0.15 | 18.1 | 4.5 | 40 | 42.5 | 43.1 |
| | Protective layer | PVB-6 | - | - | 3G8*¹ | 36 | 0.33 | | | | | |
| Example 35 | Sound insulation layer | PVB-5 | Fluorene compound -2 | 100 | 3G8*¹ | 60 | 0.15 | 12.1 | 3.5 | 35 | 42 | 42.1 |
| | Protective | PVB-6 | - | - | 3G8*¹ | 36 | 0.33 | | | | | |
| Example 36 | Sound nsulation ayer | PVB-5 | Fluorene compound -2 | 100 | 3G8*¹ | 75 | 0.15 | 5.8 | 3.2 | 30 | 41.6 | 42 |
| | Protective layer | PVB-6 | - | - | 3G8*¹ | 36 | 0.33 | | | | | |
| Example 37 | Sound insulation layer | PVB-5 | Fluorene compound -2 | 75 | 3G8^{*1} | 75 | 0.15 | -3.2 | 2.9 | 20 | 41.4 | 41.2 |
| | Protective layer | PVB-6 | - | - | 3G8^{*1} | 36 | 0.33 | | | | | |
| Example 38 | Sound insulation layer | PVB-5 | Fluorene compound -3 | 70 | 3G8^{*1} | 60 | 0.15 | 4.3 | 2.8 | 30 | 41 | 41.3 |
| | Protective layer | PVB-6 | - | - | 3G8^{*1} | 36 | 0.33 | | | | | |
| Example 39 | Sound insulation layer | PVB-5 | Fluorene compound -4 | 70 | 3G8^{*1} | 60 | 0.15 | 0.4 | 3 | 25 | 41.4 | 41.6 |
| | Protective layer | PVB-6 | - | - | 3G8^{*1} | 36 | 0.33 | | | | | |
| Example 40 | Sound insulation layer | PVB-5 | Fluorene compound -5 | 70 | 3G8^{*1} | 60 | 0.15 | 2.3 | 3.1 | 25 | 41.4 | 41.5 |
| | Protective | PVB-6 | - | - | 3G8^{*1} | 36 | 0.33 | | | | | |
| Example 41 | Sound insulation layer Protective layer | PVB-5 | Fluorene compound -6 | 70 | 3G8^{*1} | 60 | 0.15 | 1.7 | 3 | 25 | 41.3 | 41.2 |
| | | PVB-6 | - | - | 3G8^{*1} | 36 | 0.33 | | | | | |
| Example 42 | insulation layer Protective layer | PVOPr | Fluorene compound -1 | 100 | 3G8^{*1} | 60 | 0.15 | 3.2 | 3.5 | 30 | 41.7 | 42 |
| | | PVB-6 | - | - | 3G8^{*1} | 36 | 0.33 | | | | | |
| Example 43 | Sound insulation layer Protective layer | Polyvinyl acetate | Fluorene compound -1 | 100 | 3G8^{*1} | 60 | 0.15 | 2.4 | 3.4 | 25 | 41.8 | 42.1 |
| | | PVB-6 | - | - | 3G8^{*1} | 36 | 0.33 | | | | | |
| Example 44 | Sound insulation layer | Polyvinyl acetate | Fluorene compound -2 | 150 | 3G8^{*1} | 60 | 0.15 | 17.8 | 6 | 40 | 42.8 | 44 |
| | Protective layer | PVB-6 | - | - | 3G8^{*1} | 36 | 0.33 | | | | | |
| Example 45 | Sound insulation layer Protective layer | PVB-5 | Diphenylbis(4-hydroxyphenyl) methane | 70 | 3G8^{*1} | 60 | 0.15 | 3.4 | 3.2 | 25 | 41.1 | 41.9 |
| | | PVB-6 | - | - | 3G8^{*1} | 36 | 0.33 | | | | | |
| Example 46 | Sound insulation layer | PVB-5 | 9-(Hydroxy methyl) anthracene | 70 | 3G8*¹ | 60 | 0.15 | 7.8 | 3.1 | 30 | 41.1 | 40.7 |
| | Protective layer | PVB-6 | - | - | 3G8*¹ | 36 | 0.33 | | | | | |
| Example 47 | Sound insulation layer | PVB-5 | Fluorene compound -2 | 75 | 3G8*¹ | 75 | 0.81 | -3.2 | 2.9 | 15 | 41.8 | 41.5 |
| | Protective layer | - | - | - | - | - | - | | | | | |

| | | | | | | | | | | | | |
|---|---|---|---|---|---|---|---|---|---|---|---|---|
| *1: 3G8 (triethylene glycol-di-2-ethyl hexanoate) *2: Content based on 100 parts by mass of resin | | | | | | | | | | | | |

### (Comparative Example 11)

Sheet-59, sound insulation layer-19, a protective layer, and multilayer intermediate film-18 for laminated glass were produced and the evaluations were conducted in the same manner as in Example 30 except that 9,9-bis[4-(2-hydroxyethoxy)phenyl] fluorene was not added. The results are shown in Table 8.

### (Comparative Examples 12-17)

Sheets-60 to 65 were produced with compositions shown in Table 8 and the evaluations were conducted in the same manner as in Example 30. Furthermore, multilayer intermediate films 19-24 for laminated glass were produced and the evaluations were conducted in the same manner as in Example 30 except that sound insulation layers-20 to 25 and protective layers were produced with compositions and thicknesses shown in Table 7, and that they were used. The results are shown in Table 8.

**[Table 8]**

| | | Resin | Compound added besides the plasticizer described on the right | | Plasticizer | | Thickness (mm) | T_{A} (°C) | tanδ (T_{A}) | Sound transmission loss (dB) | | |
|---|---|---|---|---|---|---|---|---|---|---|---|---|
| | | | Kind | Content*² | Kind | Content*² | | | | Temperature (°C) | 3150 Hz | 5000 Hz |
| | | | | (parts by mass) | | (parts by mass) | | | | | | |
| Comparative Example 11 | Sound insulation layer | PVB-5 | - | - | 3G8*¹ | 60 | 0.1 | -7 | 1.2 | 20 | 39.5 | 37.4 |
| | Protective layer | PVB-6 | - | - | 3G8*¹ | 36 | 0.35 | | | | | |
| Comparative Example 12 | Sound insulation layer | PVB-5 | Dioctyl phthalate | 60 | - | - | 0.1 | -5 | 1.2 | 20 | 39.5 | 37.2 |
| | Protective layer | PVB-6 | - | - | 3G8*¹ | 36 | 0.35 | | | | | |
| Comparative Example 13 | Sound insulation layer | PVB-5 | Dinonyl cyclohexane -dicarboxylate | 60 | - | - | 0.1 | -5 | 1.1 | 20 | 39.4 | 37.1 |
| | Protective layer | PVB-6 | - | - | 3G8*¹ | 36 | 0.35 | | | | | |
| Comparative Example 14 | Sound insulation layer | PVB-5 | Tricresyl phosphate | 60 | - | - | 0.1 | 12 | 1.2 | 30 | 39.6 | 37.1 |
| | Protective layer | PVB-6 | - | - | 3G8*¹ | 36 | 0.35 | | | | | |
| Comparative Example 15 | Sound insulation layer | PVB-5 | Polypropylene glycol | 60 | - | - | 0.1 | -9 | 1.2 | 10 | 39.6 | 37.4 |
| | Protective layer | PVB-6 | - | - | 3G8*¹ | 36 | 0.35 | | | | | |
| Comparative Example 16 | Sound insulation layer | PVB-5 | Castor oil | 60 | - | - | 0.1 | 11 | 1.1 | 30 | 39.5 | 37 |
| | Protective layer | PVB-6 | - | - | 3G8*¹ | 36 | 0.35 | | | | | |
| Comparative Example 17 | Sound insulation layer | PVB-5 | Polyester diol | 60 | - | - | 0.1 | -3 | 1.2 | 20 | 39.6 | 37.5 |
| | Protective layer | PVB-6 | - | - | 3G8*¹ | 36 | 0.35 | | | | | |

| | | | | | | | | | | | | |
|---|---|---|---|---|---|---|---|---|---|---|---|---|
| *1: 3G8 (Triethylene glycol-di-2-ethyl hexanoate) *2: Content based on 100 parts by mass of resin | | | | | | | | | | | | |

### Description of Reference Numerals

- 1: intermediate film for laminated glass
- 2a: protective layer
- 2b: protective layer

## Claims

1. An intermediate film for laminated glass which is composed of a composition (A) containing 100 parts by mass of at least one resin (a1) selected from the group consisting of thermoplastic resins and thermosetting resins, and 10 to 1000 parts by mass of at least one compound (a2) selected from the group consisting of compound 1 through compound 4,
wherein the compound 1 is a compound represented by Chemical Formula (1): 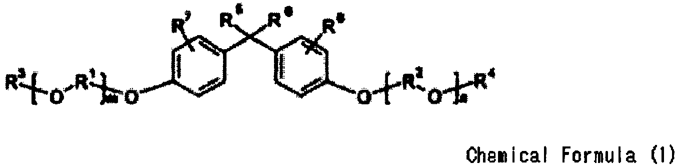 wherein R¹ and R² are each independently a group selected from the group consisting of a dimethylene group optionally having an alkyl substituent, a trimethylene group optionally having an alkyl substituent and a tetramethylene group optionally having an alkyl substituent, R³ and R⁴ are each independently a group selected from the group consisting of a hydrogen atom, an acyl group and an alkyl group, R⁵ and R⁶ are each independently a group selected from the group consisting of a hydrogen atom and an organic group, R⁷ and R⁸ are each independently any substituent which may be present or absent, m and n are any natural numbers, and (m+n) per one molecule has an average of 2 to 10;
the compound 2 is a compound, other than the compound 1, having at least one carbon atom bonded to four atoms which are all non-hydrogen atoms, at least one of the carbon atoms being directly bonded to at least three cyclic structures;
the compound 3 is a compound, other than the compound 1 and the compound 2, having one carbon atom bonded to four atoms which are all non-hydrogen atoms in a condensed ring skeleton, wherein at least one of groups bonded to the carbon atom is a group selected from the group consisting of a hydroxyl group, and an organic group having a linear or branched chain; and
the compound 4 is an acene-based compound, other than the compounds 1 to 3, having a skeleton formed by condensation of three or more benzene rings, and a molecular weight of 150-10000.

2. The intermediate film for laminated glass according to claim 1, wherein the resin (a1) is a thermoplastic resin.

3. The intermediate film for laminated glass according to claim 2, wherein the thermoplastic resin has an ester value of 5 mgKOH/g to 800 mgKOH/g.

4. The intermediate film for laminated glass according to claim 2 or 3, wherein the thermoplastic resin is at least one resin selected from the group consisting of polyvinyl acetals, polyvinyl carboxylates and olefin-vinyl carboxylate copolymers.

5. The intermediate film for laminated glass according to claim 4, wherein the polyvinyl acetal has an average residual hydroxyl group content of 15 mol% to 50 mol%.

6. The intermediate film for laminated glass according to any of claims 1-5, wherein, in the Chemical Formula (1), the ratio of compounds where m+n=2 to 3 is 10 to 100 mass%.

7. The intermediate film for laminated glass according to any of claims 1-6, wherein, in the Chemical Formula (1), R⁵ and R⁶ are both methyl groups.

8. The intermediate film for laminated glass according to any of claims 1-6, wherein, in the Chemical Formula (1), R⁵ and R⁶ are directly bonded to form a cyclic structure.

9. The intermediate film for laminated glass according to any of claims 1-8, wherein, in the compound 2, the carbon atom bonded to the four atoms which are all non-hydrogen atoms is directly bonded to four cyclic structures.

10. The intermediate film for laminated glass according to any of claims 1-9, wherein, in the compound 3, two of groups bonded to the carbon atom bonded to the four atoms which are all non-hydrogen atoms are groups selected from the group consisting of a hydroxyl group and an organic group having an linear or branched chain.

11. The intermediate film for laminated glass according to any of claims 1-10, wherein the compound (a2) has a hydroxyl value of 500 mgKOH/g or less.

12. The intermediate film for laminated glass according to any of claims 1-11 containing 1 to 100 parts by mass of a plasticizer (a3) based on 100 parts by mass of the resin (al), wherein the plasticizer (a3) is not any of the compounds 1-4.

13. The intermediate film for laminated glass according to claim 12, wherein the plasticizer (a3) contains one or more compounds selected from the group consisting of compounds obtained by esterification reaction of one molecule of a j-valent carboxylic acid with j molecules of a monovalent alcohol (j=1-4), and compounds obtained by esterification reaction of k molecules of a monovalent carboxylic acid with one molecule of a k-valent alcohol (k=1-4).

14. The intermediate film for laminated glass according to claim 12 or 13, wherein the compound (a2) and the plasticizer (a3) are compatible at 23°C in a ratio contained in the composition (A).

15. The intermediate film for laminated glass according to any of claims 1-14, wherein the composition (A) has a glass transition temperature of -30 to 50°C.

16. The intermediate film for laminated glass according to any of claims 1-15, wherein the composition (A) has tanδ of 1.5 or more at its glass transition temperature, and the tanδ is measured at a frequency of 0.3 Hz in a tension mode.

17. A multilayer intermediate film for laminated glass comprising at least one layer of the intermediate film for laminated glass according to any of claims 1-16.

18. A laminated glass formed by sandwiching the intermediate film for laminated glass according to any of claims 1-16 or the multilayer intermediate film for laminated glass according to claim 17 between two glass plates.
